# EUROPÄISCHE PATENTSCHRIFT

(11) **EP 2 596 586 B1**
(45) Veröffentlichungstag und Bekanntmachung des Hinweises auf die Patenterteilung: **22.05.2019**
(21) Anmeldenummer: 11746193.9
(22) Anmeldetag: 18.07.2011
(51) Int. Cl.: H04B 5/00, G08C 17/02, H01Q 1/32, H01Q 3/24, H01Q 9/28, H02J 7/02, H04M 1/04, H04M 1/60, H01Q 1/00

(54) **ANKOPPLUNG EINES ELEKTRONISCHEN GERÄTS MIT FUNKVERBINDUNG, INSBESONDERE EINES MOBILTELEFONS, AN EINRICHTUNGEN EINES KRAFTFAHRZEUGS**
COUPLING AN ELECTRONIC DEVICE HAVING A RADIO LINK, IN PARTICULAR A MOBILE TELEPHONE, TO EQUIPMENT OF A MOTOR VEHICLE
COUPLAGE D'UN APPAREIL ÉLECTRONIQUE À LIAISON RADIO, EN PARTICULIER D'UN TÉLÉPHONE MOBILE, À DES ÉQUIPEMENTS D'UN VÉHICULE AUTOMOBILE

(30) Priorität: 23.07.2010 DE 102010027620
(43) Veröffentlichungstag der Anmeldung: 29.05.2013
(73) Patentinhaber: Novero Dabendorf GmbH, 15806 Dadendorf (DE)
(72) Erfinder: HOLZ, Rainer, 12107 Berlin (DE); HELDT, Ronald, 15834 Rangsdorf (DE); AUGUST, Thomas, 10717 Berlin (DE); REIMANN, Ronny, 12439 Berlin (DE)
(74) Vertreter: Patentanwälte Bressel und Partner mbB
(86) Internationale Anmeldenummer: PCT/EP2011/062265
(87) Internationale Veröffentlichungsnummer: WO 2012/010560

(56) Entgegenhaltungen:
- WO-A1-2007/118694
- WO-A2-2004/095634
- DE-A1-102009 033 751

## Beschreibung

Die Erfindung betrifft eine Anordnung zur drahtlosen Ankopplung eines Funkgeräts, insbesondere eines Mobiltelefons, über eine Funkverbindung, insbesondere an eine Einrichtung eines Kraftfahrzeugs oder an eine stationäre Funkeinrichtung. Die Erfindung betrifft ferner ein entsprechendes Verfahren zum Ankoppeln eines Funkgeräts über eine Funkverbindung und ein Verfahren zum Herstellen der Anordnung.

Die Ankopplung dient insbesondere Funksignalen, die durch Funkwellen im Mobilfunk-Frequenzbereich übertragen werden, der etwa zwischen 500 MHz und 3 GHz liegt. Durch die Ankopplung ist es insbesondere möglich, innerhalb eines Kraftfahrzeuges eine Leitungsverbindung zu einer Außenantenne des Kraftfahrzeuges herzustellen, die wiederum eine Funkverbindung zu einem Mobilfunknetz herstellen und aufrechterhalten kann. Die Ankopplung kann aber auch eine Verbindung zu anderen Einrichtungen herstellen, z. B. innerhalb eines Kraftfahrzeugs zu einer Freisprecheinrichtung für das Mobiltelefon.

Unter einem Funkgerät wird ein Gerät verstanden, das über eine Funkschnittstelle mit einer entfernt gelegenen Station kommunizieren kann, während es bewegt wird. Das Gerät muss nicht, wie es bei einem Mobiltelefon aber der Fall ist, eine Tastatur aufweisen und nicht sowohl für den Sendebetrieb als auch den Empfangsbetrieb geeignet sein. Z. B. kann es sich bei dem Funkgerät um einen mobilen Notfallsender handeln, der auf Knopfdruck ein Notsignal zu der Station sendet. Andere Funkgeräte, für die die Erfindung eine drahtlose Ankopplung bereitstellen kann, sind z. B. so genannte Sticks, die über eine leitungsgebundene Schnittstelle mit einem Gerät, wie z. B. einem Computer, verbunden werden und die einen Funksender aufweisen, um dadurch das Gerät mit einem Funkempfänger oder einem Funknetz zu verbinden. Solche Sticks sind in jüngerer Zeit insbesondere für die Verbindung zu UMTS (Universal Mobile Telecommunication System) Funknetzen zum Einsatz gekommen. Derartige Sticks werden aber auch für Verbindungen zu anderen Funknetzen verwendet. Insbesondere derartige Sticks, aber auch Mobiltelefone und andere Funkgeräte, können z. B. innerhalb von Gebäuden mit der erfindungsgemäßen Anordnung an eine Leitung zu einer stationären Einrichtung (etwa einer leistungsfähigen Funkantenne mit Verstärker) angekoppelt werden.

WO 2007/118694 A1 beschreibt eine Anordnung zur Ankopplung eines Mobiltelefons an Einrichtungen eines Kraftfahrzeugs, wobei das Mobiltelefon drahtlos an eine Antennenstruktur des Kraftfahrzeugs angekoppelt ist. Die Antennenstruktur kann eine spiralförmige Antenne sein. Dadurch, dass die Antennenstruktur eine Form aufweist, die bei einer Maßstabsänderung unverändert bleibt, und für verschiedene Signalfrequenzen jeweils Strukturelemente der Antennenstruktur vorhanden sind, wird eine breitbandige Ankopplung ermöglicht, d. h. es können Funkwellen in einem breiten Frequenzbereich übertragen werden. Die Antennenstruktur kann eine flache, im Wesentlichen zweidimensionale Struktur sein, wobei sich die Mobiltelefonantenne in einem geringen Abstand zu der Antennenstruktur und damit im Nahfeld der Antennenstruktur befindet.

Die Anordnung gemäß vorliegender Erfindung kann mit Ausnahme der spiralförmigen Antennenstruktur die zuvor genannten Merkmale aufweisen. Außerdem kann der Raum, in dem sich das Funkgerät während der Ankopplung befinden kann, auch bei der vorliegenden Erfindung wie in WO 2007/118694 A1 beschrieben ausgestaltet sein, z. B. als wannenförmiger Raum.

In der WO 2007/118694 A1 ist bezüglich eines Ausführungsbeispiels einer Halterung eine Einrichtung zum induktiven (drahtlosen) Laden eines Energiespeichers erwähnt, der Teil des Mobiltelefons ist.

Unter einem induktiven Laden wird verstanden, dass Energie in Form von elektromagnetischen Wellen bzw. Feldern zu dem elektronischen Gerät übertragen wird und dort z.B. von einer Spule oder Antenne empfangen wird und in den Energiespeicher eingebracht wird.

Die Funkverbindung zwischen dem elektronischen Gerät und Einrichtungen des Kraftfahrzeugs kann unterschiedlichen Zwecken dienen. Es können auch mehrere solcher Funkverbindungen zumindest zeitweise parallel aufgebaut und betrieben werden. Wie bereits in der WO 2007/118694 A1 beschrieben, dient eine dieser Funkverbindungen der Ankopplung der Funkantenne des Funkgeräts an die Fahrzeugantenne. Hierdurch kann die Qualität der Funkverbindung zu fahrzeugexternen Stationen wesentlich verbessert werden. Eine andere Art von Funkverbindung ist eine solche, die dem Betrieb, insbesondere der Steuerung, des Funkgeräts dient. Z.B. kann eine Freisprecheinrichtung über die Funkverbindung bzw. eine Funkschnittstelle mit dem Funkgerät verbunden werden.

Während sich das Mobiltelefon in dem Kraftfahrzeug befindet und über die Funkverbindung mit Einrichtungen des Kraftfahrzeugs verbunden ist, kann sich das Fahrzeug bewegen. Wenn nicht besondere Maßnahmen vorgesehen werden, kann sich daher auch das Funkgerät relativ zu der Anordnung zum Ankoppeln bewegen. Ferner sollen möglichst verschiedene Funkgeräte mit derselben Anordnung und möglichst ohne die Verwendung spezieller, auf das Gerät angepasster Adapter angekoppelt werden können. Z.B. soll es möglich sein, ein Smart Phone und wahlweise ein sehr kleines Mobiltelefon anzukoppeln. Dabei soll jeweils eine induktive, d.h. drahtlose Ladung des Energiespeichers des elektronischen Geräts möglich sein.

Die Position des elektronischen Geräts relativ zu der Ladeeinrichtung, die die elektromagnetischen Felder zur Ladung des Energiespeichers erzeugt (Primärseite) ist entscheidend für eine effektive induktive Energieübertragung und damit eine schnelle Ladung des Energiespeichers. Andererseits ist es der Wunsch von Benutzern der Anordnung, das Funkgerät nicht mit besonderem Fingergeschick in eine spezielle Position bringen zu müssen. Vielmehr möchten die Benutzer das elektronische Gerät möglichst auf einfache Weise in der Anordnung ablegen.

DE 10 2009 033 751 A1 beschreibt, dass bei einer Anordnung zum drahtlosen Ankoppeln eine im Wesentlichen horizontal verlaufende Oberfläche vorgesehen ist, auf die das Funkgerät zur Ankopplung, d. h. sowohl zur Herstellung der Funkverbindung als auch zur induktiven Ladung aufgelegt werden kann. Die Anordnung weist eine Auflagefläche zum Auflegen des elektronischen Geräts auf, so dass das aufgelegte elektronische Gerät über die Funkverbindung angekoppelt ist oder zumindest in der aufgelegten Position eine Funkverbindung herstellbar ist. Um das Mobiltelefon auch bei Einwirkung von externen Kräften, wie sie bei Beschleunigungen oder Verzögerungen des Kraftfahrzeugs auftreten können, in einer optimalen Position zu halten, weist die Auflagefläche eine um eine senkrecht zur Auflagefläche verlaufende Achse rotationssymmetrische Aussparung auf, in die ein entsprechend der rotationssymmetrischen Aussparung geformter Vorsprung des Funkgeräts eingreift.

DE 10 2009 033 751 A1 ermöglicht es daher, das Funkgerät in der optimalen Position für das induktive Laden zu halten. Jedoch schränkt die rotationssymmetrische Aussparung die Möglichkeiten ein, ein Funkgerät in beliebiger Position innerhalb eines größeren Bereichs von möglichen Positionen anzuordnen und drahtlos anzukoppeln. Sollte eine induktive Ladung zumindest zeitweise nicht erforderlich sein oder nicht gewünscht sein, erschwert die rotationssymmetrische Aussparung die Handhabung für den Benutzer. Hat ein Funkgerät jedoch nur auf einer Seite einen Vorsprung, der der rotationssymmetrischen Aussparung entspricht, kann das Funkgerät mit seiner anderen Seite aufgelegt werden und ist dann frei von Einschränkungen hinsichtlich der Positionierung. Auch könnten Funkgeräte aufgelegt werden, die keinerlei rotationssymmetrischen Vorsprung aufweisen.

Hinzu kommt, dass eine Ladespule, die auf der so genannten Primärseite das elektromagnetische Feld erzeugt, welches auf der Seite des Funkgeräts (Sekundärseite) durch Induktion eine elektrische Spannung erzeugt, mit Antennen, die der drahtlosen Ankopplung des Funkgeräts über eine Funkverbindung dienen, interferiert. Insbesondere wird durch die Ladespule die Dämpfung erhöht, die eine Funkverbindung bei drahtloser Ankopplung zwischen der Antenne auf der Primärseite und der Funkantenne des Funkgeräts auf der Sekundärseite erfährt. Dies gilt auch dann, wenn die Ladespule nicht betrieben wird.

Es ist eine Aufgabe der vorliegenden Erfindung, eine Anordnung und ein Verfahren der zuvor genannten Art anzugeben, die es einem Benutzer erlauben, ein Funkgerät auf einfache Weise drahtlos anzukoppeln, wobei es sowohl möglich sein soll, das Funkgerät während des Bestehens der drahtlosen Ankopplung induktiv zu laden als auch auf eine Ladung zu verzichten.

Zur Lösung wird vorgeschlagen, dass ähnlich wie bei der oben genannten Auflagefläche zumindest eine Anlagefläche zum Anlegen des Funkgeräts vorhanden ist. Erstreckt sich die Anlagefläche in ungefähr horizontaler Richtung, handelt es sich um eine Auflagefläche. Die Anlagefläche kann jedoch auch etwa vertikal oder anders verlaufen und das Funkgerät wird in diesem Fall z. B. von einer Anpressvorrichtung an die Anlagefläche angedrückt. Vorzugsweise ist die Anlagefläche eben. Bei dem Funkgerät kann es sich insbesondere um ein Funkgerät mit einer Platine handeln, auf der eine Funkantenne oder eine Mehrzahl von Funkantennen, insbesondere als Streifenleiter, angeordnet sind. Üblicherweise ist ferner eine Massefläche vorhanden, so dass die Richtcharakteristik der Funkantenne (n) auf der einen Seite der Platine sich von der Richtcharakteristik der Antenne auf der anderen Seite der Platine unterscheidet. Auf der einen Seite der Platine ist die Empfindlichkeit der Antenne bzw. die Stärke der von der Antenne abgestrahlten elektromagnetischen Wellen größer als auf der anderen Seite. Z.B. bei einem Mobiltelefon ist die Platine derart angeordnet, dass die Empfindlichkeit/Stärke der Wellen an der vom Ohr des Benutzers abgewandeten Seite größer ist als auf der dem Ohr zugewandten Seite, wenn der Benutzer das Telefon in der Hand hält und dabei in der Nähe seines Ohrs platziert, um ein Telefongespräch führen zu können. Am Übergang der Halbräume, die der ersten Seite und der zweiten Seite der Platine entsprechen, existiert üblicherweise ein lokales Minimum der Empfindlichkeit/Stärke der abgestrahlten Wellen. Ein solches Funkgerät wird vorzugsweise derart an der Anlagefläche angelegt, dass die Seite mit der größeren Empfindlichkeit/Stärke der abgestrahlten elektromagnetischen Wellen der Anlagefläche zugewandt ist. Insbesondere kann die Platine parallel oder ungefähr parallel (z.B. maximal unter einem Winkel von 3°) zur Anlagefläche verlaufen, wenn diese eben ist.

Auch weist die Anlagefläche entsprechend wie bei der DE 10 2009 033 751 A1 eine rotationssymmetrische Aussparung auf und ist eine primärseitige Ladespule zur induktiven Ladung eines Energiespeichers des Funkgeräts vorgesehen. Dabei ist die magnetische Flussdichte in Richtung der Rotationsachse maximal. Unter rotationssymmetrisch wird verstanden, dass die Aussparung durch eine gedachte oder tatsächliche Drehung um ihre Rotationsachse, wobei die Drehung keine vollständige Umdrehung ist, identisch oder nahezu identisch auf sich selbst abgebildet werden kann. Dieser Definition entsprechen z. B. regelmäßige Vielecke, Fünfecke, Sechsecke usw. Spezieller wird unter rotationssymmetrisch aber auch verstanden, dass die Aussparung durch eine gedachte Drehung um einen beliebigen Winkel um ihre Rotationsachse auf sich selbst abgebildet werden kann. Die Aussparung weist in diesem Fall daher einen kreisförmigen Außenumriss auf.

Außerdem weist die Anordnung jedoch zumindest eine Antenne auf (die auch als Kopplungsantenne bezeichnet werden kann), um das Funkgerät drahtlos anzukoppeln. Die zumindest eine Antenne weist eine elektrisch leitende Schicht auf, die eine Antennenstruktur bildet, um die drahtlose Ankopplung zu ermöglichen. Die elektrisch leitende Schicht wird von einem Träger aus elektrisch nicht leitendem Material getragen, erstreckt sich entlang der Anlagefläche und ist vorzugsweise in kleinerem Abstand zu der Anlagefläche angeordnet als die Ladespule. Die Ladespule wird nicht näher an der Anlagefläche angeordnet als die nächstliegenden elektrisch leitfähigen Bereiche der Antenne oder Antennen. Bei einem plattenförmigen Träger z. B., dessen großflächige Oberflächen sich etwa parallel zu der Anlagefläche erstrecken, wie es bei einer Leiterplatte der Fall ist, wird es daher bevorzugt, die Ladespule nicht als diskretes Bauelement auf der der Anlagefläche näheren Oberfläche des Trägers anzuordnen. Bei einer Ausgestaltung wird die Ladespule als Anordnung von Leiterbahnen auf der näher liegenden Oberfläche des Trägers angeordnet. Bei einer anderen Ausgestaltung wird die Ladespule als diskretes Bauteil in einer Aussparung (z. B. einer Ausfräsung) in der näher gelegenen Oberfläche des Trägers angeordnet. Dadurch, dass sich die Ladespule nicht von der näheren Oberfläche des Trägers aus gesehen weiter in Richtung der Anlagefläche erstreckt als die Antenne oder Antennen, können die Antennen in besonders geringem Abstand zu der Anlagefläche angeordnet werden, z. B. in einem Abstand von 2-8 mm, insbesondere 2-5 mm. Hierdurch wird eine gute Ankopplung an die Funkantenne des Funkgeräts ermöglicht. Angesichts der Tatsache, dass bei heutzutage üblichen Bauformen von Funkantennen, z. B. bei Mobiltelefonen, bereits durch die Hand oder Finger der Bedienperson Veränderungen in der Kopplung zu Funkstationen und/oder Antennen bewirkt werden, ist eine besonders nahe Anordnung der Kopplungsantenne oder Kopplungsantennen von großem Vorteil. Daher erstreckt sich die elektrisch leitende Schicht in gleichem Abstand oder in kleinerem Abstand zu der Anlagefläche als die Ladespule. Wenn hier von einem Abstand der Ladespule und der Antennen zu der Anlagefläche gesprochen wird, wird die Aussparung nicht betrachtet. Wenn daher z. B. die Anlagefläche mit Ausnahme der Aussparung eben ist, wird der Abstand zur Ebene der ebenen Anlagefläche betrachtet.

Eine Antenne oder mehrere der Antennen können jeweils durch mehrere solche elektrisch leitende Schichten gebildet sein, wobei die Mehrzahl der Schichten insgesamt die Antennenstruktur bildet. Insbesondere kann der Träger ein plattenförmiger Träger (z. B. die oben genannte Platine) sein, an dessen einen Seite die elektrisch leitende Schicht der Antenne(n) angeordnet ist/sind und an dessen gegenüberliegenden, weiter von der Anlagefläche entfernten Seite die Ladespule angeordnet ist. Z. B. kann/können die elektrisch leitende(n) Schicht(en) der zumindest einen Antenne in einem räumlichen Bereich verlaufen, der durch zwei zueinander parallele Ebenen begrenzt ist, welche parallel zu der Anlagefläche sind.

Insbesondere ist es möglich, dass eine Mehrzahl der Antennen (d. h. der Kopplungsantennen) nebeneinander positioniert ist und die Antennen wahlweise betreibbar sind, um die drahtlose Ankopplung des Funkgeräts herzustellen und aufrechtzuerhalten. Insbesondere dies ermöglicht es, das Funkgerät in beliebigen Positionen und Ausrichtungen an die Anlagefläche anzulegen und jeweils über die ausgewählte Funkantenne eine Funkverbindung mit geringer Dämpfung zu betreiben. Es ist jedoch auch möglich, dies mit einer einzigen Antenne zu erreichen.

Dadurch, dass sich die elektrisch leitende Schicht der zumindest einen Antenne näher an der Anlagefläche befindet als die Ladespule, kann zwischen der zumindest einen Antenne und der Funkantenne des Funkgeräts eine Nahfeld-Kopplung betrieben werden, die nur geringfügig von der Ladespule beeinträchtigt wird, selbst wenn sich die Funkantenne im Bereich der Rotationsachse der rotationssymmetrischen Aussparung befindet. Dies gilt insbesondere dann, wenn der Energiespeicher nicht induktiv geladen wird, d.h. die Ladespule stromlos ist. Insbesondere kann sich sogar eine der Antennen oder die Antenne zwischen der Ladespule und der Funkantenne des Funkgeräts befinden. Da die Antenne durch eine elektrisch leitende Schicht gebildet ist, die in der Regel (wie es bei elektrischen Leiterbahnen auf Leiterplatten der Fall) dünn sind, behindert eine derartig positionierte Antenne der Anordnung nicht in erheblicher Weise das induktive Laden. Ein Grund hierfür liegt darin, dass die Schicht von dem Magnetfeld durchdrungen werden kann, welches zum Zweck der induktiven Ladung erzeugt wird. Bevorzugt wird es jedoch, dass die Rotationsachse der Aussparung einen Bereich der Antennenstruktur durchdringt, in dem sich kein elektrisch leitendes Material der Schicht befindet. Außerdem wird es bevorzugt, dass die zwischen der Ladespule und der Funkantenne angeordnete Antenne nicht mit einem Bezugspotential verbunden ist (z. B. Masse), wenn diese Antenne nicht betrieben wird, aber eine induktive Ladung über die Ladespule stattfindet.

Somit ist es möglich, das Funkgerät innerhalb eines von der Anordnung definierten Raumes in beliebigen Positionen und Ausrichtungen in Kontakt zu der Anlagefläche zu positionieren und dabei außerdem entweder eine induktive Ladung durchzuführen oder nicht. In jedem Fall kann die Funkantenne des Funkgeräts an die Antenne der Anordnung oder eine ausgewählte Antenne der Anordnung drahtlos angekoppelt sein und über diese Ankopplung eine Funkverbindung betrieben werden. Dabei kann die Kopplungsdämpfung je nach Ausrichtung und Positionierung des Funkgeräts und je nachdem, ob induktiv geladen wird oder nicht, schwanken. Allerdings wird es bevorzugt, dass die Antenne oder die Antennen so ausgestaltet sind, dass die Kopplungsdämpfung für den Benutzer während des normalen Betriebes des Funkgeräts nicht zu Qualitätseinbußen führt. Insbesondere soll die Schwankung der Kopplungsdämpfung aufgrund unterschiedlicher Positionierung und Ausrichtung geringer sein als die Variation der Kopplungsdämpfung, die beim Anlegen unterschiedlicher handelsüblicher Mobiltelefone jeweils in der bestmöglichen Position und Ausrichtung auftritt.

Eine Kopplungsdämpfung, die wie zuvor beschrieben schwanken kann, ohne dass es zu Qualitätseinbußen beim Betrieb des Funkgeräts über die drahtlose Ankopplung kommt, wird als im Wesentlichen die gleiche Kopplungsdämpfung bezeichnet. Insbesondere sind Kopplungsdämpfungen im Wesentlichen gleich, wenn die Signalstärke, die üblicherweise bei Mobiltelefonen in bis zu sechs Stufen angezeigt wird, in derselben Stufe liegt oder im Grenzbereich zweier Stufen.

Alternativ wird über den gesamten Bereich von möglichen Positionen und Ausrichtungen des Funkgerätes, während es an der Anlagefläche anliegt, ein vorgegebener Maximalwert der Kopplungsdämpfung nicht überschritten. Der Maximalwert kann insbesondere in Bezug auf einen bestimmten Funkgerättyp vorgegeben sein. Für verschiedene Typen können unterschiedliche Maximalwerte vorgegeben sein.

Die Erfindung bezieht sich auf eine Anordnung zur drahtlosen Ankopplung eines Funkgeräts gemäß Anspruch 1.

Dem liegt der Gedanke zugrunde, dass Funkgeräte mit einer sekundärseitigen Ladeeinrichtung üblicherweise so ausgestaltet sind, dass sich die Funkantenne des Funkgeräts in einer Entfernung zur Rotationsachse befindet, wenn der Vorsprung des Funkgeräts in die Aussparung eingreift oder, anders ausgedrückt, wenn die sekundärseitige Ladeeinrichtung optimal bezüglich der primärseitigen Ladespule angeordnet und ausgerichtet ist. Wenn aber das Funkgerät nicht aufgeladen werden soll, kann es sich in nahezu beliebigen Positionen und Ausrichtungen innerhalb eines durch die Anordnung definierten räumlichen Bereichs befinden und dabei an der Anlagefläche anliegen. Dabei kann es vorkommen, dass die Funkantenne des Funkgeräts in einem räumlichen Teilbereich des insgesamt möglichen Bereichs angeordnet ist, in dem während eines Ladevorganges bei optimaler Ausrichtung der sekundärseitigen Ladeeinrichtung diese sekundärseitige Ladeeinrichtung angeordnet wäre. Bei Betrachtung dieser Anordnung werden unterschiedliche Abstände der Ladeeinrichtung und der Funkantenne von der Anlagefläche außer Acht gelassen, d.h. es wird z.B. eine Draufsicht auf die Anlagefläche betrachtet. Insbesondere kann daher bezüglich der Kopplungsdämpfung der möglichen Funkverbindungen zwischen der Funkantenne des Funkgeräts einerseits und der Antenne oder einer Antenne der Mehrzahl der Antennen andererseits das Folgende gelten:
a. die Funkverbindung zwischen der Funkantenne und der Antenne oder einer anderen Antenne der Mehrzahl von Antennen erfährt bei beliebiger Position und/oder Ausrichtung des Funkgeräts relativ zu der Anordnung im Wesentlichen die gleiche Kopplungsdämpfung, wenn das Funkgerät an der Anlagefläche anliegt, unabhängig davon, ob der Vorsprung in die Aussparung eingreift oder nicht und/oder
b. die Kopplungsdämpfung der Funkverbindung überschreitet einen für den gesamten Bereich von möglichen Positionen und Ausrichtungen des Funkgerätes, während es an der Anlagefläche anliegt, vorgegebenen Maximalwert nicht, unabhängig davon, ob der Vorsprung in die Aussparung eingreift oder nicht.

Die Erfindung wird weiterhin durch ein Verfahren zur drahtlosen Ankopplung eines Funkgeräts gemäß Anspruch 9 und ein Verfahren zur Herstellung einer Anordnung zur drahtlosen Ankopplung eines Funkgeräts gemäß Anspruch 11 definiert.

Insbesondere kann die rotationssymmetrische Aussparung die Merkmale haben, die in der DE 10 2009 033 751 A1 beschrieben sind.

Die Anlagefläche ist vorzugsweise von einem Kunststoff gebildet, der ein Abrutschen einer Geräteoberfläche erschwert, aber nicht völlig verhindert, damit der Vorsprung des elektronischen Geräts auch wieder in die Aussparung hineinrutschen kann, wenn die Anlagefläche ungefähr in horizontalre Richtung verläuft.

Es wird bevorzugt, dass die primärseitige Ladespule mit einer Detektionseinrichtung kombiniert ist, die ausgestaltet ist zu detektieren, dass die Ladespule eine elektromagnetische Leistung emittiert, die von einer sekundärseitigen Einrichtung des Funkgeräts empfangen und in elektrische Leistung umgewandelt wird. Z.B. kann die Detektionseinrichtung in diesem Fall ein Signal erzeugen, das zu einer optischen und/oder akustischen Anzeige führt. Damit kann der Benutzer darüber informiert werden, dass die Ladung des Energiespeichers funktioniert. Die Detektionseinrichtung kann z.B. die von der Ladespule aufgenommene elektrische Leistung messen oder auf andere, an sich bekannte Weise detektieren.

Die Einrichtung zum induktiven Laden des Energiespeichers des Funkgerätes weist die primärseitige Ladespule auf. Um die Kopplungsdämpfung der jeweiligen Funkverbindung zwischen der Antenne oder einer der Antennen der Anordnung und der Funkantenne des Funkgeräts nicht zu erhöhen, weist die Ladeeinrichtung jedoch vorzugsweise außer ggf. dem Material der Leitung der Spule und deren elektrischen Anschlüssen keine zusätzlichen permanent magnetischen Materialien oder ferromagnetische Materialien auf. Vorzugsweise ist auch das Material der Leitung der Spule und deren elektrischen Anschlüssen nicht permanent magnetisch und nicht ferromagnetisch. Außer der eigentlichen Ladespule, die aufgrund von elektrischem Stromfluss das Feld erzeugt, welches in der sekundärseitigen Empfangseinrichtung des Funkgeräts eine Spannung induziert, weist die Ladeeinrichtung daher keine weiteren Materialien auf, die das Feld magnetisch oder durch elektrischen Stromfluss bezüglich der auf der Sekundärseite erzielten Wirkung verändern.

Bei der Ladespule kann es sich z. B. um Wicklungen einer einzigen elektrischen Leitung oder von elektrisch parallelen Leitungen (z. B. aus Kupferdraht) handeln. Die Wicklungen verlaufen insbesondere etwa kreisförmig um die Rotationsachse.

Um einerseits eine effektive, schnelle Aufladung des Energiespeichers des Funkgeräts zu ermöglichen und andererseits nicht mit der Funkverbindung zwischen der Antenne oder einer der Antennen einerseits und der Funkantenne des Funkgeräts andererseits zu interferieren, wird es bevorzugt, dass die Ladespule durch Anlegen und Betreiben einer Wechselspannung mit einer Frequenz betrieben wird, die zumindest um einen Faktor 10 unter der minimal möglichen Funkfrequenz für Mobiltelefone liegt. Die Frequenz der Wechselspannung der Ladespule beträgt daher vorzugsweise höchstens 50 MHz. Es sind außerdem die gesetzlichen Bestimmungen bezüglich der Erzeugung von elektromagnetischen Feldern zu beachten. Die Frequenz liegt daher z. B. im Bereich zwischen 1 und 10 kHz. Bei entsprechender Ausgestaltung kann es jedoch erreicht werden, dass auch bei höheren Frequenzen die Grenzwerte für die Emission von elektromagnetischer Strahlung unterschritten werden.

Das Funkgerät soll möglichst an allen Stellen an der Anlagefläche angelegt werden können, die aufgrund der Abmessungen des Funkgeräts möglich sind. Dabei soll die Koppeldämpfung möglichst unabhängig vom Ort sein oder zumindest nicht um Größenordnungen variieren. Eine andere wünschenswerte Eigenschaft ist ein breitbandiges Ankopplungsverhalten, das bei einer geringen Koppeldämpfung möglichst ebenfalls über die gesamte ebene Oberfläche hinweg erreichbar ist. Damit wird es in der Praxis möglich, in verschiedenen Frequenzbereichen Funkgeräte anzukoppeln. Ferner wird es dann möglich, Funkgeräte mit sehr unterschiedlichen Abmessungen wirksam anzukoppeln. Funkgeräte mit im Verhältnis zu der Oberfläche des Trägers kleinen Abmessungen können dann über einen verhältnismäßig großen Bereich an verschiedenen Positionen und bei verschiedenen Ausrichtungen an der Anlagefläche angeordnet werden. Die Position und Ausrichtung größerer Funkgeräte kann zumindest über einen kleineren Bereich variieren.

Durch unterschiedliche Positionen und Ausrichtungen ändert sich z. B. bei Mobiltelefonen der Ort, an dem die Mobiltelefon-Antenne über der z. B. ebenen Anlagefläche liegt. Es ist daher ein Ziel, die Antenne(n) so auszuführen, dass die Kopplung des Funkgeräts an allen möglichen Positionen und bei allen möglichen Ausrichtungen gering ist und/oder möglichst wenig variiert.

Die planaren (schichtartigen) Antennenstrukturen können insbesondere wie an sich bei Leiterplatten bekannt hergestellt werden.

Alternativ oder zusätzlich können die Antennen elektrisch leitende Streifen aufweisen, die auf dem plattenförmigen Träger aus elektrisch nicht leitendendem Material aufgebracht sind. Es handelt sich in diesem Fall um so genannte Streifenantennen. Die genannten Schichten sind dann streifenförmig strukturiert. Dies ermöglicht einerseits Gestaltungen mit den gewünschten Kopplungseigenschaften hinsichtlich Frequenz und Kopplungsdämpfung und andererseits eine Ladespule aus Sicht des Funkgerätes in einer Position und mit einer Ausrichtung anzuordnen, bei denen die Rotationsachse einen von elektrisch leitendem Material der Antennen freien Bereich durchdringt.

Es folgen Ausgestaltungen von Antennenstrukturen. Es wird zunächst eine Struktur mit zwei verschiedenen elektrisch leitenden Schichten beschrieben. Die Anordnung kann jedoch alternativ mehrere solcher Antennenstrukturen aufweisen, wobei z. B. in den Ebenen der beiden Schichten weitere elektrisch leitende Flächen vorhanden sind, die zu verschiedenen Antennenstrukturen gehören. Dann wird eine Struktur mit mindestens einer elektrisch leitenden Schicht beschrieben. Die Anordnung kann mehrere solcher Strukturen z. B. in einer oder verschiedenen Ebenen aufweisen.

Der elektrisch isolierende Träger weist gemäß einer ersten Ausgestaltung eine erste ebene Oberfläche und eine auf der gegenüberliegenden Seite des Trägers liegende zweite ebene Oberfläche auf, die parallel zu der ersten Oberfläche verläuft. Auf der ersten Oberfläche ist eine elektrisch leitende Schicht aufgebracht ist, die beim Betrieb der Antenne als Kopplungsantenne Funkwellen zu einer Funkantenne des Funkgerätes emittiert und/oder von dieser empfängt und dadurch das Funkgerät ankoppelt. Die Schicht weist eine erste Fläche auf, die einen konvexen Außenrand aufweist. Die erste Fläche ist über eine als Streifenleitung ausgeführte, vorzugsweise gerade Anschlussleitung, die Teil der Schicht ist, elektrisch leitend mit einem ersten Kontakt eines Anschlusses zum Anschließen der Hochfrequenzleitung verbunden, wobei sich die Streifenleitung von dem konvexen Außenrand bis zu einem Randbereich des Trägers erstreckt. Es ist eine zweite elektrisch leitende Schicht auf der zweiten Oberfläche aufgebracht, die eine zweite Fläche aufweist, die einen konvexen Außenrand aufweist. Der Bereich der zweiten elektrisch leitenden Schicht, der die zweite Fläche aufweist, ist auf einem Teilbereich der zweiten Oberfläche aufgebracht, wobei von dem Teilbereich aus gesehen auf der gegenüberliegenden Seite des Trägers die Streifenleitung auf der ersten Oberfläche aufgebracht ist. Die zweite Fläche ist elektrisch leitend mit einem zweiten Kontakt des Anschlusses verbunden.

Beim Betrieb der Antennenstruktur fungieren die erste Fläche und die zweite Fläche daher jeweils als Massefläche bzw. Bezugsfläche für die andere Fläche. Außerdem fungiert die zweite Fläche als Massefläche der Streifenleitung. Der erste und der zweite Kontakt werden an separaten, gegeneinander isolierten Leitern einer Hochfrequenzleitung angeschlossen.

Insbesondere sind in einer Draufsicht auf die erste oder zweite Oberfläche die konvexen Außenränder der ersten und der zweiten Fläche einander zugewandt. Es besteht daher in der Draufsicht ein Bereich zwischen den konvexen Außenrändern, wobei der Abstand zwischen den konvexen Außenrändern in dem Bereich variiert. Anders ausgedrückt gibt es einen kürzesten Abstand und gibt es Abstandslinien zwischen anderen Punkten der verschiedenen Außenränder, die eine größere Länge aufweisen.

Aufgrund der zwei verschiedenen Flächen auf den gegenüberliegenden Seiten des Trägers, die jeweils eine Antennenstruktur darstellen, wird über einen großen Bereich der Oberfläche des Trägers eine drahtlose Ankopplung zu einer Antenne des Funkgeräts möglich. Insbesondere wenn die erste Fläche und die zweite Fläche spiegelbildlich geformt sind (betrachtet in einer Draufsicht auf eine der ebenen Oberflächen des Trägers, wobei die Draufsicht auch die an der Unterseite aufgebrachten Strukturen betrachtet) gibt es auf den gegenüberliegenden Seiten der Spiegelachse jeweils einen Bereich, der eine drahtlose Ankopplung bei denselben Eigenschaften (Frequenzbereich sowie Koppeldämpfung) bewirkt, wenn die Antenne des Funkgeräts darüber angeordnet ist. Dabei bildet die jeweils andere Fläche die Bezugsfläche, wobei die Bezugsfläche ebenfalls strukturiert ist und auf diese Weise darüber kein Bereich entsteht, in dem die Ankopplung bei deutlich erhöhter Koppeldämpfung stattfindet. Im Ergebnis steht daher insgesamt ein großer Flächenbereich über der Oberfläche des Trägers für eine drahtlose Ankopplung bei geringer Koppeldämpfung zur Verfügung.

Die Streifenleitung behindert dabei die Kopplung nicht oder nicht wesentlich, wenn die Antenne des Funkgerätes über der Streifenleitung positioniert ist. Vorzugsweise ist die Streifenleitung durch einen geradlinigen Streifen realisiert, der unter Berücksichtigung der elektrischen Eigenschaften des Trägermaterials und der Abmessungen des Trägermaterials sowie der Streifenleitung eine definierte, vorgegebene Impedanz von z. B. 50 Ω hat.

In einer Ausgestaltung weist die erste Fläche und/oder die zweite Fläche einen geschlossen umlaufenden konvexen Außenrand auf, der optional jedoch durch zumindest einen schmalen ausgesparten Streifen unterbrochen ist. Im Wesentlichen jedoch ist der Außenrand geschlossen umlaufend. Z. B. ist die umlaufende Fläche ein Kreis, ein Oval oder eine Ellipse. Durch die gewählte Form der Flächen und der zugehörigen Bezugsflächen wird über zumindest einen breiten Frequenzbereich eine geringe Koppeldämpfung erreicht. Zudem ergeben sich in dem breiten Frequenzbereich nur geringe Impedanzänderungen. Die Anordnung kann daher als breitbandig bezeichnet werden. Damit werden Resonanzen bezüglich Funkwellen in einem relativ großen Frequenzbereich erreicht. Dabei bestimmen die inneren Abmessungen der Fläche die Wellenlängen und damit die Frequenzen, bei denen eine verlustarme Kopplung möglich ist.

Vorzugsweise ist die erste Fläche und/oder die zweite Fläche in einer Draufsicht auf die erste oder zweite Oberfläche des Trägers bezüglich einer Symmetrieachse symmetrisch geformt. Dabei verläuft die Symmetrieachse insbesondere in Richtung der Längsachse der Streifenleitung, wenn diese als gerade Streifenleitung ausgeführt ist. Unter der Längsachse wird die Achse in Längsrichtung der Streifenleitung und in der Mitte der Streifenleitung verstanden. Die zweite Fläche, die auf der gegenüberliegenden, zweiten Oberfläche des Trägers aufgebracht ist, besitzt dabei eine Symmetrieachse, die parallel zu der Längsachse der Streifenleitung verläuft. Zum Beispiel könnte die Symmetrieachse durch Verschieben der Längsachse der Streifenleitung in vertikaler Richtung an die zweite Oberfläche erhalten werden. Eine solche symmetrische Gestaltung der ersten Fläche und/oder der zweiten Fläche führt dazu, dass die Antenne des Funkgerätes in Richtungen quer zu der Symmetrieachse verschoben werden kann und dabei im Wesentlichen die gleichen Eigenschaften der Ankopplung beibehalten werden.

Bei einer bevorzugten Weiterbildung sind innerhalb der symmetrisch geformten Fläche zwei parallel zu der Längsachse verlaufende Streifen aus dem elektrisch leitenden Material der Fläche ausgespart, wobei die Streifen vorzugsweise symmetrisch auf gegenüberliegenden Seiten der Längsachse verlaufen. Durch solche ausgesparten Streifen werden zusätzliche Resonanzen für Funkwellen geschaffen, die dazu führen, dass die Antennenstruktur auch in einem zweiten Frequenzband bei geringen Werten der Koppeldämpfung für die Ankopplung geeignet ist.

Insbesondere kann jeder der Streifen an einem seiner Enden in einem Abstand zu dem konvexen Außenrand der Fläche enden und an seinem anderen Ende den geschlossen umlaufenden Rand der Fläche über eine Länge, die der Breite des Streifens entspricht, unterbrechen. Es verbleibt daher eine durchgehende elektrisch leitfähige Schicht innerhalb der Fläche. Dabei ist die Breite der ausgesparten Streifen so schmal, dass in dem Frequenzband bzw. Frequenzbereich mit den kleineren Wellenlängen (d. h. mit den größeren Frequenzen) der Streifen keinen wesentlichen Einfluss auf die Koppeldämpfung hat. Anders formuliert ist die Breite des Streifens sehr viel geringer als die kleineren Wellenlängen der Funkwellen, so dass der Streifen für die Funkwellen mit den verhältnismäßig kleinen Wellenlängen ohne wesentlichen Einfluss ist. Dagegen bilden sich bei wesentlich größeren Wellenlängen, d. h. kleineren Frequenzen, weitere Resonanzen, bei denen die ausgesparten Streifen von Bedeutung sind.

Bei einer Variante der Anordnung sind die erste Fläche und die zweite Fläche nicht auf den gegenüberliegenden Seiten des Trägers aufgebracht, sondern auf derselben Seite, nämlich auf der ersten ebenen Oberfläche. Beide Flächen weisen einen konvexen Außenrand auf. Mit ihren konvexen Außenrändern sind die Flächen über einen Balun an die Hochfrequenz-Leitung angeschlossen. Auf diese Weise bilden die beiden Flächen die verschiedenen Pole einer Dipol-Antenne. Sie werden über den Balun gegenphasig angesteuert. Zur Anpassung an die Impedanz der Hochfrequenzleitung kann auch ein Balun mit Transformator eingesetzt werden, der eine Impedanztransformation bewirkt.

Der Balun ermöglicht, wie beschrieben, die Anordnung der ersten und der zweiten Fläche auf derselben Oberfläche des Trägers. Dadurch ist die Herstellung vereinfacht. Auch kann die Antenne des Funkgerätes bei gleichem Abstand zu der Oberfläche des Trägers exakt in demselben Abstand wahlweise über der ersten Fläche und der zweiten Fläche angeordnet werden. Erstreckt sich z. B. eine Auflagefläche zum Auflegen des Funkgerätes in konstantem Abstand zu der ebenen Oberfläche des Trägers, ist der Abstand von der Antenne des Funkgerätes zu den beiden Flächen exakt der gleiche, wenn die Funkgerätantenne entweder über der ersten Fläche oder der zweiten Fläche angeordnet ist.

Bezüglich der Ausgestaltungen und Weiterbildungen dieser Variante gilt das gleiche wie für die oben beschriebene Antennenstruktur mit der Ausnahme, dass auf der gegenüberliegenden Seite der zweiten Fläche keine Streifenleitung vorhanden ist. Der Balun kann jedoch jeweils über eine kurze Streifenleitung mit dem konvexen Außenrand der beiden Flächen verbunden werden. Die oben erwähnte Längsachse bzw. Symmetrieachse verläuft dabei z. B. in der Mitte der Träger-Oberfläche zwischen zwei parallelen Außenrändern des Trägers.

Alternativ zu einem Balun können die erste und die zweite Fläche auch direkt mit den verschiedenen elektrischen Kontakten eines Anschlusses zum Anschließen einer Anschlussleitung verbunden sein.

Die Ladespule wird vorzugsweise in einem Bereich angeordnet, so dass die Rotationsachse (d. h. die Achse mit dem größten magnetischen Fluss, s.o.) nicht eine der elektrisch leitenden Flächen durchstößt. Z. B. befindet sich die Ladespule in einem Bereich, so dass die Rotationsachse etwa mittig den Freiraum zwischen den beiden elektrisch leitenden Flächen der Antennenstruktur durchstößt. Wenn, wie bevorzugt, der konvexe Außenrand nicht geschlossen umlaufend gestaltet ist, d. h. die erste Fläche und/oder die zweite Fläche nicht wie bei einem Kreis, einem Oval oder einer Ellipse einen geschlossen umlaufenden konvexen Außenrand hat, kann sich die Ladespule auch in einem Bereich befinden, so dass die Rotationsachse einen von elektrisch leitfähigem Material der ersten Fläche und der zweiten Fläche freien Bereich durchstößt, der sich z. B. zwischen konkaven Außenrändern und/oder geraden Außenrändern befindet.

Gemäß einer zweiten Ausgestaltung wird eine andere Antennenstruktur zur drahtlosen Ankopplung eines Funkgerätes an einer Hochfrequenz-Leitung vorgeschlagen, wobei
- die Anordnung einen elektrisch isolierenden Träger aufweist, der zumindest eine erste ebene Oberfläche aufweist,
- auf der ersten Oberfläche eine elektrisch leitende Schicht aufgebracht ist, die beim Betrieb der Anordnung als Kopplungsantenne Funkwellen zu einer Funkantenne des Funkgerätes emittiert und/oder von dieser empfängt und dadurch das Funkgerät ankoppelt,
- die Schicht eine erste Fläche aufweist, die einen konvexen Außenrand und einen innerhalb des konvexen Außenrandes verlaufenden konkaven Innenrand aufweist, sodass ein Bereich innerhalb des konkaven Innenrandes ausgespart ist.

Unter einem konkaven Innenrand wird ein Innenrand verstanden, der eine Einstülpung bzw. einen sich in die Fläche aus elektrisch leitendem Material hineinerstreckenden Bereich berandet, der nicht durch elektrisch leitendes Material gebildet ist. Insbesondere verlaufen der konvexe Außenrand und der konkave Innenrand zumindest über einen Teil ihrer Längserstreckung nebeneinander, so dass zwischen ihnen ein streifenförmiger Bereich der elektrisch leitenden Schicht gebildet ist.

Der ausgesparte Bereich kann von der Rotationsachse (Achse des größten magnetischen Flusses bei induktiver Ladung) durchstoßen werden. Es hat sich auch gezeigt, dass der ausgesparte Bereich die guten Kopplungseigenschaften der Antennenstruktur nicht beeinträchtigt. Dies gilt insbesondere dann, wenn in ähnlicher Weise wie oben beschrieben die erste Fläche über eine als Streifenleitung ausgeführte gerade Anschlussleitung, die Teil der Schicht ist, elektrisch leitend an die Hochfrequenz-Leitung angeschlossen ist, wobei sich die Streifenleitung von dem konvexen Außenrand bis zu einem Randbereich des Trägers erstreckt, wenn der elektrisch isolierende Träger eine auf der gegenüberliegenden Seite des Trägers liegende zweite ebene Oberfläche aufweist, die parallel zu der ersten Oberfläche verläuft, und wenn als Massefläche der ersten Schicht eine zweite Fläche auf einen Teilbereich der zweiten Oberfläche aufgebracht ist, wobei von dem Teilbereich aus gesehen auf der gegenüberliegenden Seite des Trägers die Streifenleitung auf der ersten Oberfläche aufgebracht ist. Diese Massefläche kann z. B. die oben anhand der ersten Lösung beschriebene zweite Fläche mit konvexem Außenrand sein, in welchem Fall wiederum auch ein konkaver Innenrand vorhanden ist, so dass ein Bereich innerhalb des konkaven Innenrandes ausgespart ist. Unter "ausgespart" wird verstanden, dass dieser Bereich kein elektrisch leitfähiges Material der Schicht aufweist. Die Massefläche kann jedoch auch eine Fläche sein, die keinen konvexen Außenrand hat, z. B. stattdessen - in einer Draufsicht auf die zweite Oberfläche des Trägers - betrachtet, einen geraden Rand hat, der sich senkrecht zu dem Verlauf der geraden Anschlussleitung erstreckt, welche auf der ersten Oberfläche aufgebracht ist.

Insbesondere kann der ausgesparte Bereich auch dafür genutzt werden, eine streifenförmige zweite Antennenstruktur für eine Kopplung der Funkwellen in einem zweiten, von dem Frequenzbereich der ersten Fläche verschiedenen Bereich anzuordnen. Dabei wird die streifenförmige zweite Antennenstruktur vorzugsweise über denselben Anschluss wie die erste Fläche mit der Hochfrequenz-Leitung verbunden. Insbesondere kann der Anschlusspunkt der ersten Fläche an einem Punkt einer Symmetrieachse des konvexen Außenrandes liegen. Dies gilt nicht nur für die hier beschriebene Lösung und Ausgestaltung, sondern auch für andere Ausgestaltungen, bei denen die erste Fläche einen konvexen Außenrand hat. Im Fall einer zweiten Antennenstruktur im ausgesparten Bereich durchstößt die Rotationsachse der Ladeanordnung vorzugsweise weder das elektrisch leitende Material der ersten noch der zweiten Struktur.

Der ausgesparte Bereich wird insbesondere für die Schaffung einer Kopplung in einem zweiten Wellenlängenbereich bzw. Frequenzbereich genutzt. Eine streifenförmige zweite Antennenstruktur ist dabei besonders gut geeignet, Funkwellen mit größeren Wellenlängen, d. h. kleineren Frequenzen zu übertragen bzw. zu empfangen als es bei der ersten Fläche mit dem konvexen Außenrand der Fall ist. Grund dafür ist, dass die Länge des Streifens maßgeblich für die zu übertragende bzw. zu empfangende Wellenlänge ist, auch wenn der Verlauf des Streifens nicht geradlinig ist.

Besonders gut wird der ausgesparte Bereich genutzt, wenn die streifenförmige zweite Antennenstruktur labyrinthförmig ausgestaltet ist oder mäanderförmig ausgestaltet ist. Zusätzlich kann die zweite Antennenstruktur sich nicht nur in dem ausgesparten Bereich innerhalb des konkaven Innenrandes befinden, sondern sich auch außerhalb dieses Bereiches über die ebene Oberfläche des Trägers erstrecken. Insbesondere ist es möglich, dass die streifenförmige zweite Antennenstruktur einen Längsabschnitt aufweist, der sich von dem ausgesparten Bereich der ersten Fläche in einen Bereich der ersten Oberfläche des Trägers erstreckt, der außerhalb des konvexen Außenrandes der ersten Fläche liegt. Dadurch wird die Fläche der ersten Oberfläche, über der bei guter Kopplungsqualität eine Ankopplung an eine Antenne eines Funkgerätes möglich ist, vergrößert. Insbesondere wenn die Breite der ersten Antennenstruktur, die durch die Breite der ersten Fläche zwischen dem Außenrand gebildet ist, kleiner als die Breite des Trägers ist, kann der Bereich außerhalb des konvexen Außenrandes für den Längsabschnitt oder für verschiedene Längsabschnitte der streifenförmigen zweiten Antennenstruktur benutzt werden. Dieser Bereich außerhalb des konvexen Außenrandes kann für eine zweite Antennenstruktur aber auch dann genutzt werden, wenn sich diese zweite Antennenstruktur nicht innerhalb des ausgesparten Bereiches erstreckt.

Generell wird bevorzugt, dass die Antennenstrukturen Funkgeräte im Nahfeld der Antennenstruktur(en) ankoppeln.

Die folgende Anordnung nutzt insbesondere zumindest eine der Kopplungsantennen der zuvor beschriebenen Anordnungen. Die Anordnung löst das Problem, in einem möglichst großen Bereich über der Oberfläche des Trägers eine Ankopplung eines Funkgerätes mit geringer Koppeldämpfung zu ermöglichen.

Grundidee der im Folgenden beschriebenen Anordnung ist die Verwendung einer Mehrzahl von Antennen, die wahlweise betrieben werden, um die drahtlose Ankopplung des Funkgeräts herzustellen und aufrechtzuerhalten.

Jede der Antennen kann eine oder mehrere Antennenstrukturen aufweisen. Die Antennen sind nebeneinander angeordnet. Daher ist es möglich, dass das Funkgerät sich in verschiedenen Positionen befindet und/oder verschieden orientiert ist und dennoch eine oder mehrere der Antennen eine drahtlose Ankopplung des Funkgeräts bei geringer Kopplungsdämpfung ermöglichen. Es wird vorgeschlagen, jeweils diejenige Antenne der Mehrzahl von Antennen auszuwählen, über die die Funkverbindung zu der Funkantenne des Funkgeräts die geringste Kopplungsdämpfung erfährt.

Die Anordnung mit mehreren Antennen erlaubt es, das Funkgerät vorzugsweise innerhalb eines begrenzten Raumes zur Aufnahme des Funkgeräts beliebig zu positionieren und/oder zu orientieren und dennoch über zumindest eine der Antennen eine drahtlose Ankopplung bei geringer Dämpfung herzustellen. Es wird vorgeschlagen, dass die Anordnung aufweist:
- eine Mehrzahl von Antennen, die wahlweise zur drahtlosen Ankopplung einer Funkantenne des Funkgeräts betreibbar sind, wobei die Antennen insbesondere derart nebeneinander angeordnet sind, dass das Funkgerät innerhalb eines durch die Anordnung definierten Bereichs in beliebigen Positionen und/oder Ausrichtungen relativ zu der Mehrzahl von Antennen jeweils in einer Position und Ausrichtung ist, in der eine Funksignalübertragung zwischen einer der Antennen oder einer Mehrzahl benachbarter Antennen einerseits und der Funkantenne des Funkgeräts andererseits einer niedrigeren Dämpfung unterworfen ist als zwischen den anderen Antennen und der Funkantenne des Funkgeräts, wobei die Dämpfung insbesondere jeweils unter einem vorbestimmten Maximalwert liegt,
- einem Multiplex-Schalter, der einen ersten Hochfrequenz-Signalanschluss zum Verbinden mit einer externen Anschlussleitung aufweist und der an eine Mehrzahl von internen Anschlussleitungen der Anordnung angeschlossen ist, über die der Multiplex-Schalter jeweils mit einer der Antennen oder einer Mehrzahl benachbarter Antennen verbunden ist, wobei der Hochfrequenz-Signalanschluss durch Umschalten des Multiplex-Schalters wahlweise mit einer der internen Anschlussleitungen oder mit Gruppen der internen Anschlussleitungen verbindbar ist,
- einen Detektor, der ausgestaltet ist, eine Signalstärke eines von einer der Antennen oder von mehreren der Antennen über den Multiplex-Schalter zu dem Hochfrequenz-Signalanschluss übertragenen Hochfrequenz-Signals zu detektieren,
- eine Steuerung, die mit dem Detektor verbunden ist und die ausgestaltet ist, den Multiplex-Schalter derart zu schalten, dass die Antenne oder die Antennen mit der/den am niedrigsten gedämpften Funkverbindung(en) zu dem Funkgerät, d.h. die Antenne oder die Antennen, die das Hochfrequenz-Signal mit der größten Signalstärke zu dem Multiplex-Schalter überträgt/übertragen, dauerhaft mit dem Hochfrequenz-Signalanschluss verbunden wird/werden.

Insbesondere wird der Maximalwert der Dämpfung in dem gesamten durch die Anordnung definierten Bereich (z. B. dem Bereich, in dem das Funkgerät an der Anlagefläche anliegt) unterschritten, wobei es lokal, d.h. in bestimmten Positionen/Ausrichtungen Minima der Dämpfung existieren. Es ist jedoch nicht erforderlich, diese Minima aufzufinden, da der Maximalwert vorzugsweise einer ausreichend niedrigen Dämpfung entspricht, um überall in dem Bereich eine gute Ankopplung zu gewährleisten. Der Maximalwert ist abhängig von den Eigenschaften der Funkantenne des Funkgeräts und der Antennen der Anordnung sowie von zumindest den Abmessungen des Funkgeräts. Die Abmessungen bewirken einen Mindestabstand der Funkantenne von den Antennen der Anordnung. Der Bereich wird verlassen, wenn der Maximalwert unterschritten wird, insbesondere wenn das Funkgerät über den Rand der Anlagefläche hinausbewegt wird.

Insbesondere ist das Funkgerät durch Verschiebung entlang der Mehrzahl von Antennen jeweils in eine Position und Ausrichtung bringbar, in der die Funksignalübertragung eine der genannten Bedingungen erfüllt.

Vorzugsweise ist der Multiplex-Schalter in jeder Schalterstellung nur mit einer der Antennen der Anordnung verbunden. Auch wenn die Dämpfung mehrerer der Antennen gleich niedrig ist, reicht die Ankopplung über eine der Antennen aus. Daher kann die Alternative, bei der der Schalter den Hochfrequenz-Signalanschluss durch Umschalten wahlweise mit Gruppen der internen Anschlussleitungen verbindet, entfallen.

Vorzugsweise weisen die Antennen jeweils elektrisch leitende Streifen auf, die auf einem plattenförmigen Träger aus elektrisch nicht leitendem Material aufgebracht sind. Insbesondere eignen sich die oben beschriebenen Kopplungsantennen als nebeneinander angeordnete Antennen. Vorzugsweise sind dabei die einzelnen Antennen der Anordnung in gleicher Weise ausgestaltet, insbesondere gleich geformt. Allerdings können die Antennen der Anordnung unterschiedlich ausgerichtet sein.

Der Multiplex-Schalter ermöglicht es, die Antennen wahlweise mit dem Hochfrequenz-Signalanschluss zu verbinden, an den die externe Anschlussleitung anschließbar ist. Damit der bestmögliche Schaltzustand des Multiplex-Schalters gewählt wird, weist die Anordnung einen Detektor auf, wie oben beschrieben. Der Detektor kann sich insbesondere auf der Seite des Multiplex-Schalters befinden, an der sich auch der Hochfrequenz-Signalanschluss befindet. Möglich wäre es auch, jeweils einen Detektor in einer der internen Anschlussleitungen vorzusehen, die den Multiplex-Schalter mit den einzelnen Antennen verbinden. Jedoch sind die von den Detektoren gelieferten Signale in diesem Fall möglicherweise nicht ohne Einschränkung hinsichtlich der von Ihnen gelieferten Detektionsergebnisse vergleichbar. Auch ist der Aufwand für eine Mehrzahl von Detektoren und deren signaltechnische Verschaltung aufwendiger.

Bevorzugt wird es daher, dass die Steuerung in der Lage ist mit zu berücksichtigen, in welcher Schalterstellung sich der Multiplex-Schalter befindet, d.h. welche der internen Anschlussleitungen zum Hochfrequenz-Signalanschluss durchgeschaltet ist. Mit dieser Information kann die Steuerung erkennen, welches von dem Detektor erzeugte Detektionssignal zu welcher Schalterstellung gehört.

Vorzugsweise wird einmalig, jeweils wenn ein Funkgerät im Bereich der Anordnung angeordnet worden ist, oder wiederholt (z.B. in regelmäßigen Zeitabständen) durch Schalten aller möglichen Schaltzustände des Multiplex-Schalters, d.h. durch Verbinden jeder der Antennen nacheinander mit dem Hochfrequenz-Signalanschluss, ermittelt, über welche Antenne die bestmögliche drahtlose Ankopplung zu dem Funkgerät, d.h. zu dessen Funkantenne, erzielt werden kann. Vorzugsweise wird während dieses Tests bzw. während dieser Detektionsphase das Funkgerät so betrieben, dass es eine zeitlich nicht veränderliche Signalstärke beim Aussenden von Funksignalen anwendet. Alternativ oder zusätzlich wird der Test so schnell durchgeführt, dass sich die Signalstärke der von dem Funkgerät ausgesendeten Funksignale nicht wesentlich ändert. Dem liegt die Erkenntnis zugrunde, dass die für die drahtlose Ankopplung zu den verschiedenen Antennen bestehende unterschiedliche Kopplungsdämpfung bei einer bestimmten Position und Ausrichtung des Funkgeräts sehr verschieden ist.

Nach der Detektionsphase bzw. nach dem Test wählt die Steuerung den Schaltzustand des Multiplex-Schalters, bei dem die geringste Kopplungsdämpfung besteht, d.h. für den der Detektor die größte Signalstärke detektiert hat. Die Steuerung steuert den Multiplex-Schalter entsprechend an und stellt diesen besten Schaltzustand her. Dieser Schaltzustand wird dann zumindest für einen sehr viel längeren Zeitraum, als der Test benötigt, für den Betrieb des Funkgeräts beibehalten. Dieser Zeitraum kann daher als dauerhaft bezeichnet werden.

Bei dem Detektor handelt es sich z.B. um ein Bauteil, das handelsüblich ist. Bezüglich des Aufbaus eines solchen handelsüblichen Hochfrequenzsignal-Detektors wird auf die Fachliteratur verwiesen, z.B. auf das Buch "Grundlagen der Hochfrequenz-Messtechnik von Burkhard Schiek, Bild 1.25: Detektor mit Zwangsanpassungswiderstand". Das Buch hat die ISBN 978-3-540-64930-4. Für die Detektion kann demgemäß z.B. eine Schottky-Diode eingesetzt werden.

Die Vorrichtung zum induktiven Laden kann wie in DE 10 2009 033 751 A1 gestaltet sein.

Ausführungsbeispiele der Erfindung werden nun unter Bezugnahme auf die beigefügte Zeichnung beschrieben. Die einzelnen Figuren der Zeichnung zeigen schematisch:

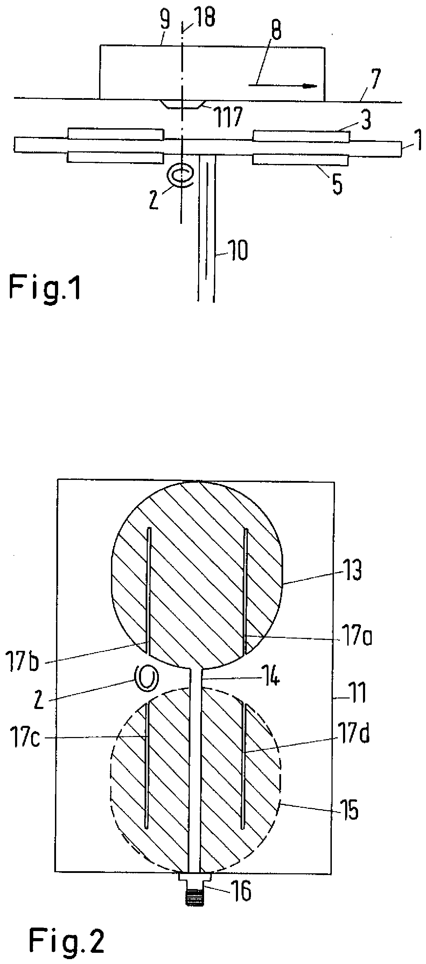

- Fig. 1: schematisch eine Seitenansicht eines Trägers, auf dessen ebenen Oberflächen, die auf gegenüberliegenden Seiten des Trägers liegen, jeweils elektrisch leitende planare Strukturen aufgebracht sind, die somit jeweils innerhalb einer Schicht liegen, wobei über der oberen Oberfläche des Trägers auf einer Auflage ein Funkgerät angeordnet ist, sodass zwischen einer Antenne des Funkgerätes und den auf den Oberflächen des Trägers aufgebrachten Antennenstrukturen eine Kopplung im Nahfeld der Antennen stattfinden kann, wobei Antennensignale der Funkantenne des Funkgerätes über die Antennenstrukturen zu einer Hochfrequenz-Leitung übertragen werden und/oder umgekehrt,
- Fig. 2: eine Draufsicht auf eine Leiterplatte, auf deren Oberseite eine erste elektrische leitfähige Fläche als Antennenstruktur aufgebracht ist, die über eine Streifenleitung elektrisch angeschlossen ist, wobei auf der Unterseite der Leiterplatte symmetrisch zu der ersten Fläche eine zweite Fläche aus elektrisch leitendem Material als zweite Antennenstruktur angeordnet ist, wobei die erste Fläche und die zweite Fläche gegenseitig die Massefläche der anderen Fläche bilden,
- Fig. 3: eine Draufsicht auf eine weitere Leiterplatte, auf deren Oberseite zwei symmetrisch zueinander angeordnete elektrisch leitende Flächen aufgebracht sind, wobei die Flächen über einen Balun an die in der Figur nicht dargestellte Hochfrequenz-Leitung angeschlossen sind,
- Fig. 4: eine weitere Leiterplatte, auf deren Oberseite eine Antennenstruktur mit konvexem Außenrand und konkavem Innenrand angeordnet ist, so dass zwischen dem Innenrand und dem Außenrand ein streifenförmiger elektrisch leitender Bereich gebildet und so dass in dem Bereich innerhalb des konkaven Innenrandes ein ausgesparter Bereich entsteht, und wobei auf der Unterseite der Leiterplatte eine Massefläche angeordnet ist,
- Fig. 5: eine Antennenstruktur ähnlich der in Fig. 4, wobei jedoch der ausgesparte Bereich innerhalb des konkaven Innenrandes mit einer zweiten Antennenstruktur versehen ist, die mäanderförmig ist,
- Fig. 6: eine Antennenstruktur wie in Fig. 4 und Fig. 5, wobei jedoch in dem ausgesparten Bereich eine zweite Antennenstruktur angeordnet ist, die labyrinthförmig ist,
- Fig. 7: eine Leiterplatte mit einer Antennenstruktur wie in Fig. 4, 5 und 6, wobei sich in dem ausgesparten Bereich eine streifenförmige zweite Antennenstruktur erstreckt, die sich in Bereiche außerhalb des konvexen Außenrandes fortsetzt,
- Fig. 8: eine Anordnung ähnlich wie in Figur 3, wobei die beiden Antennenstrukturen jedoch nicht über einen Balun, sondern asymmetrisch direkt an eine Hochfrequenz-Leitung angeschlossen sind,
- Fig. 9: eine Anordnung zur drahtlosen Ankopplung eines Funkgeräts mit einer Mehrzahl von Antennen, die nebeneinander angeordnet sind.
- Fig. 10: einen Abschnitt eines Mobiltelefons, wobei der oben liegende Gehäusedeckel, unter dem sich ein aufladbarer Energiespeicher befindet, einen nach oben vorspringenden kegelstumpfförmigen Vorsprung hat,
- Fig. 11: das Mobiltelefon gemäß Fig. 11, wobei die Seite mit dem Vorsprung nach unten gerichtet ist und der Vorsprung in eine entsprechend geformte kegelstumpfförmige Aussparung einer Anordnung zur Ankopplung des Mobiltelefons an Einrichtungen eines Kraftfahrzeugs hineinragt, wobei das Mobiltelefon auf eine Auflagefläche der Anordnung aufgelegt ist,
- Fig. 12: eine Draufsicht auf die Anordnung gemäß Fig. 11, die das in einer bestimmten Drehposition relativ zu der Rotationsachse der kegelstumpfförmigen Aussparung ausgerichtete Mobiltelefon auf der Auflagefläche zeigt.

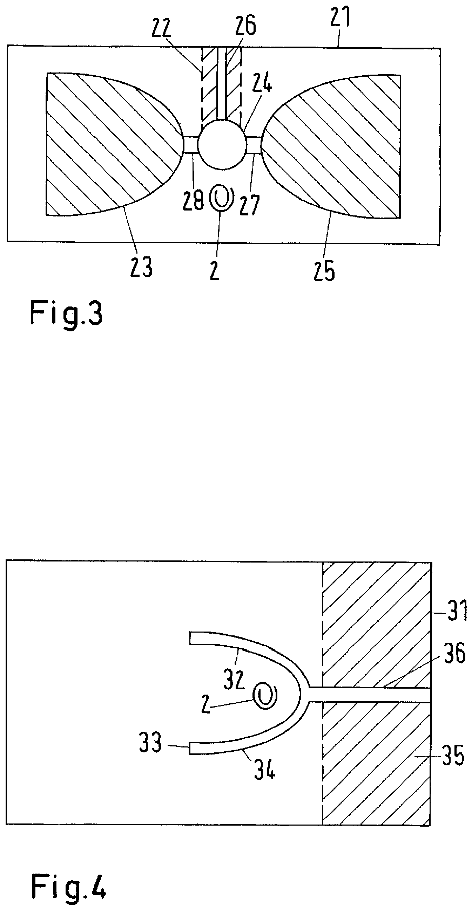

Fig. 1 zeigt einen Träger 1, insbesondere eine konventionelle, handelsübliche Leiterplatte. Auf den gegenüberliegenden ebenen Oberflächen des Trägers 1, die in Fig. 1 oben und unten an dem Trägermaterial liegen, sind jeweils Antennenstrukturen als strukturierte Schicht aufgebracht. Die Antennenstrukturen oberhalb sind mit dem Bezugszeichen 3 und die Antennenstrukturen unterhalb mit dem Bezugszeichen 5 bezeichnet. Oberhalb der oberen Antennenstrukturen 3 ist eine Auflagefläche 7 zur Auflage eines Mobiltelefons 9 oder eines anderen Funkgerätes angeordnet. Die Auflagefläche 7 wird z. B. durch nicht dargestellte Teile eines Gehäuses der Anordnung getragen und in festem Abstand zu der Antennenstruktur 3 positioniert. Das Mobiltelefon 9 weist eine Funkantenne 8 auf, über die die Kopplung zu der Antennenstruktur 3, 5 bewirkt wird. Die Antennenstrukturen 3, 5 sind an eine Hochfrequenz-Leitung 10 angeschlossen. Bei anderen Ausführungsformen kann es sich bei der unterhalb des Trägers 1, d. h. an dessen unterer Oberfläche angeordneten elektrisch leitenden Schicht nicht um eine strukturierte Schicht mit konvexem Außenrand handeln, z. B. um eine rechteckige Massefläche. Bei noch einer weiteren Ausführungsform, die noch anhand von Fig. 3 erläutert wird, kann sich auf der unteren Oberfläche gar keine elektrisch leitende Schicht befinden.

Unterhalb des Trägers 1 ist eine Ladespule zum induktiven Laden eines nicht in Fig. 1 dargestellten Energiespeichers des Mobiltelefons 9 angeordnet. Einrichtungen, die die Ladespule 2 tragen, sind in Fig. 1 nicht dargestellt. Die Auflagefläche weist eine rotationssymmetrische Aussparung 117 auf. Die Rotationsachse 18 der Aussparung 117 verläuft in dem Beispiel von Fig. 1 durch einen Bereich des Trägers, in dem sich weder auf der Oberseite noch auf der Unterseite Material der elektrisch leitenden Schichten befindet.

Fig. 2 zeigt eine Leiterplatte mit einer oberen ebenen Oberfläche und einer unteren ebenen Oberfläche, die parallel zueinander verlaufen. Die Leiterplatte 11 ist in Fig. 2 mit Blick auf die obere Oberfläche dargestellt. Auf diese Oberfläche ist eine erste ovale Fläche 13 aus elektrisch leitendem Material aufgebracht. Eine Streifenleitung 14, die sich geradlinig von dem konvexen Außenrand der ersten Fläche 13 zu einem unten in Fig. 2 dargestellten Rand der Leiterplatte 11 erstreckt, bildet zusammen mit der ersten Fläche 13 eine durchgehende elektrisch leitfähige Schicht auf der oberen Oberfläche der Leiterplatte 11.

Der Streifenleitung 14 gegenüberliegend, auf der unteren ebenen Oberfläche der Leiterplatte 11, ist eine zweite ovale Fläche 15 auf die Oberfläche aufgebracht. Wie auch bei den folgenden Figuren werden elektrisch leitende Flächen auf der Unterseite (d.h. in den Figuren auf der Rückseite der jeweiligen Leiterplatte liegende Flächen) schraffiert und durch gestrichelte Linien berandet dargestellt. Die erste Fläche 13 und die zweite Fläche 15 sind gleich geformt und haben die gleichen Abmessungen, wobei sie jedoch in der Draufsicht, die in Fig. 2 dargestellt ist, symmetrisch zu einer horizontal in Fig. 2 verlaufenden, nicht dargestellten Symmetrieachse angeordnet sind. Ovale Flächen verändern durch Spiegelung nicht ihre Form. Die Fig. 2 zeigt jedoch noch eine Besonderheit, die nur bei einer speziellen, bevorzugten Ausgestaltung vorhanden ist, nämlich ausgesparte Streifen, die frei von leitendem Material sind. Die Streifen sind mit den Bezugszeichen 17a bis 17d bezeichnet. Ihre Position innerhalb der ovalen Fläche 13, 15 entspricht der Spiegelsymmetrie, d. h. die Streifen 17 enden jeweils an den Teilen der konvexen Außenränder der ovalen Flächen 13, 15, die einander zugewandt sind. An den außenliegenden Bereichen der konvexen Außenränder befinden sich dagegen keine streifenförmigen Aussparungen, d. h. die Streifen enden in einem Abstand zu diesen konvexen Außenrandbereichen, welche nahe den Außenrändern der Leiterplatte 11 liegen.

Ein Verbinder 16, der unten in Fig. 2 an der Leiterplatte 11 dargestellt ist und der an der Leiterplatte 11 befestigt ist, dient dem elektrischen Anschluss der ersten Fläche 13 und der zweiten Fläche 15 an eine nicht in Fig. 2 dargestellte Hochfrequenz-Leitung. Bei dem Verbinder 16 handelt es sich z. B. um einen Koaxialstecker oder eine Koaxialbuchse. Dabei ist die Streifenleitung 14 an den einen Leiter des Verbinders 16 angeschlossen und die zweite Fläche 15 an den anderen Leiter des Verbinders 16 angeschlossen, z. B. an den Außenleiter im Fall eines Koaxialsteckers oder einer Koaxialbuchse.

Angedeutet ist in Fig. 2 auch die Lage der Ladespule 2 unterhalb der Leiterplatte 11. Die Ladespule 2 kann an der Leiterplatte 11 befestigt sein. In diesem Fall jedoch ist die Ladespule über einen Abstandshalter in einem Abstand zu der unteren Oberfläche der Leiterplatte angeordnet, da sich auf der unteren Oberfläche der Leiterplatte 11 die zweite Fläche 15 befindet. Eine solche Befestigung der Ladespule an einer Leiterplatte oder einem anderen Träger mit einem Abstandshalter kann auch bei anderen Ausführungsformen vorkommen. Der Abstandshalter ist z. B. ein Stab aus elektrisch nicht leitendem und nicht ferromagnetischem Material, z. B. Kunststoff.

Die in Fig. 2 dargestellte Anordnung kann in folgender Weise modifiziert werden: Die streifenförmigen Aussparungen, welche symmetrisch zu einer in vertikaler Richtung verlaufenden Mittelachse der Leiterplatte angeordnet sind, können weggelassen werden. In diesem Fall verliert die Anordnung allerdings die Eigenschaft, auch in einem Bereich geringerer Frequenzen Funkwellen bei niedriger Koppeldämpfung koppeln zu können. Alternativ oder zusätzlich können die elektrisch leitenden Flächen auf der oberen und der unteren Oberfläche der Leiterplatte anders geformt sein, z. B. kreisförmig, elliptisch, halbkreisförmig, halb-elliptisch. In jedem Fall wird jedoch bevorzugt, dass die konvexen Außenränder an den in der Draufsicht einander zugewandten Seiten der Flächen liegen, wenn die Fläche nicht durch einen geschlossen umlaufenden konvexen Außenrand berandet ist. Dies ist z. B. auch bei der noch näher zu beschreibenden Ausführungsform in Fig. 3 der Fall, bei der jedoch weitere Unterschiede zu der Ausführungsform von Fig. 2 bestehen.

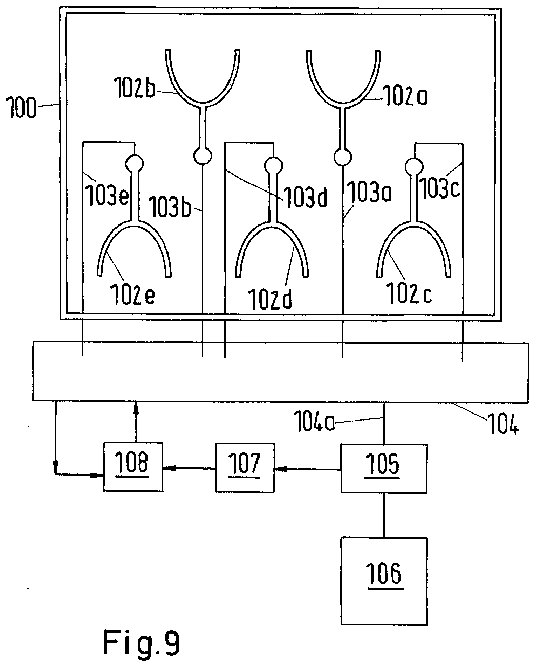

Auch kann die in Fig. 2 dargestellte Anordnung mehrfach nebeneinander vorhanden sein. Z. B. kann die Leiterplatte 11 eine dreimal so große Oberfläche wie in Fig. 2 dargestellt haben und können drei der Paare von ovalen Flächen nebeneinander angeordnet sein. Entsprechendes gilt auch für die weiteren Antennenstrukturen, die im Folgenden anhand der Figuren 3 bis 8 beschrieben werden. Diese Antennenstrukturen mit mehreren Antennen können insbesondere wie noch anhand von Fig. 9 beschrieben wird, wahlweise, z. B. über einen Multiplexschalter für den Betrieb einer Funkverbindung zur Funkantenne des Funkgerätes geschaltet werden. Z. B. ist daher der Verbinder 16 gemäß Fig. 2 mit einem Anschluss eines Multiplexschalters verbunden. Zumindest ein weiteres Paar von ovalen Flächen ist über einen anderen Verbinder mit einem anderen Anschluss des Multiplexschalters verbunden. Gegebenenfalls sind weitere Paare von ovalen Flächen vorhanden, die wiederum mit jeweils einem Anschluss des Multiplexschalters verbunden sind.

Bei der in Fig. 3 dargestellten Leiterplatte 21 sind elektrisch leitfähige Antennenstrukturen ausschließlich in einer Schicht auf der oberen Oberfläche der Leiterplatte 21 aufgebracht. Die erste Fläche 23 und die zweite Fläche 25 sind wiederum symmetrisch zu einer Spiegelsymmetrieachse angeordnet, die sich in diesem Fall in vertikaler Richtung in der Mitte der Leiterplatte 21 erstreckt. Vertikal bedeutet hier, dass die Achse in der Bildebene liegt und von oben nach unten in Fig. 3 verläuft. An den einander zugewandten konvexen Außenrändern der Flächen 23, 25 sind diese jeweils über eine kurze Streifenleitung 27, 28, die sich in derselben elektrisch leitfähigen Schicht wie die Flächen 23, 25 befindet, an einen Balun 24 angeschlossen. Ferner ist der Balun 24 über eine weitere Streifenleitung 26 der Schicht an eine nicht in Fig. 3 dargestellte Hochfrequenz-Leitung angeschlossen. Auf der Rückseite befindet sich der Streifenleitung 26 gegenüberliegend eine elektrisch leitende Massefläche 22 (schraffiert in Fig. 3), die ebenfalls an den Balun 24 angeschlossen ist und ihn mit der der Hochfrequenz-Leitung verbindet.

Die in Fig. 3 dargestellten Flächen 23, 25 weisen einen konvexen Außenrand auf, der einen veränderlichen Krümmungsradius hat. Bei einer alternativen Ausgestaltung könnte der Krümmungsradius jedoch konstant sein, so dass es sich dann bei den Flächen um Halbkreise handelt. Im konkret in Fig. 3 dargestellten Fall sind die konvexen Außenränder Ränder einer halben Ellipse oder parabolisch. Sie könnten auch die Außenränder eines halben Ovals sein.

Eine mögliche Position einer Ladespule 2, die vorzugsweise auf der Unterseite der Leiterplatte 21 ohne Abstandshalter befestigt ist, ist in Fig. 3 dargestellt. In der Draufsicht von Fig. 3 befindet sich die Ladespule 2 zwischen den konvexen Außenrändern der Flächen 23, 25 in einem Bereich, in dem der Abstand zwischen den Flächen 23, 25 klein ist.

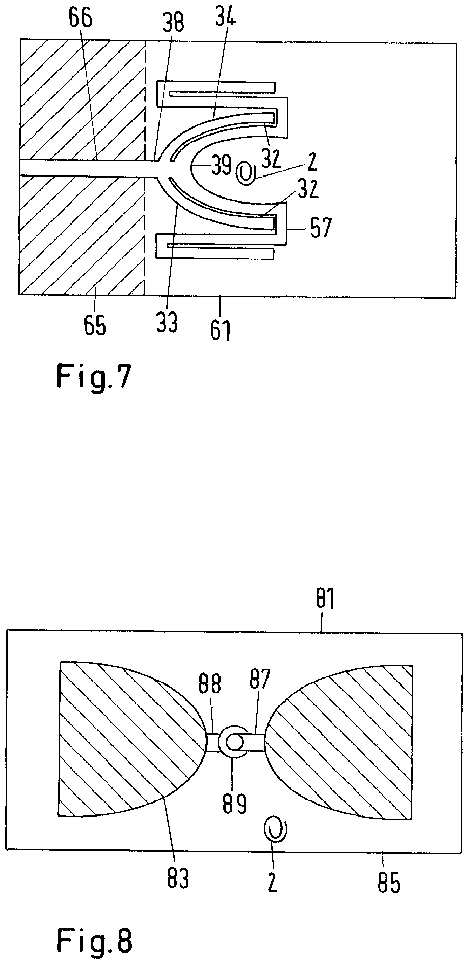

Fig. 8 zeigt auf einer Leiterplatte 81 zwei Antennenstrukturen 83, 85, die z.B. wie in Figur 2 oder 3 geformt sind und relativ zueinander angeordnet sind. Statt einem Balun 24 sind die einzelnen Strukturen jedoch direkt an eine Hochfrequenz-Anschlussleitung 89 angeschlossen. Ein Ende der Hochfrequenz-Anschlussleitung 89 ist in der Mitte der Leiterplatte 81 schematisch durch zwei konzentrische Kreise dargestellt. Zum Beispiel symbolisiert der äußere konzentrische Kreis die Abschirmung der Leitung 89 und symbolisiert der innere Kreis die eigentliche Antennensignalleitung. In dem Ausführungsbeispiel ist die links dargestellte Antennenstruktur 83 über eine kurze Streifenleitung 88 an die Abschirmung der Leitung 89 angeschlossen und ist die rechts dargestellte Antennenstruktur 85 über eine kurze Streifenleitung 87 an die Signalleitung angeschlossen. Eine oder beide Streifenleitungen können durch die Leiterplatte 81 hindurch mit der Hochfrequenz-Anschlussleitung 89 kontaktiert sein.

Um anzudeuten, dass mehrere verschiedene Positionen für die Anordnung der Ladespule an der Unterseite der Leiterplatte in Frage kommen, ist die Ladespule 2 in der Ausführungsform der Fig. 8 an anderer Stelle angeordnet als bei der Ausführungsform von Fig. 3. Sie kann sich jedoch wiederum unmittelbar an der unteren Oberfläche der Leiterplatte 81 befinden.

Die in Fig. 2, Fig. 3 und Fig. 8 dargestellten Ausführungsformen sind von Vorteil für eine Ankopplung von Funkgeräten, die an verschiedenen Positionen über der Oberfläche der Leiterplatte angeordnet werden können, ohne wesentliche Veränderungen der Koppeldämpfung in Kauf nehmen zu müssen. Z. B. wäre die Ankopplung auf der rechten Seite der Leiterplatte 21 in Fig. 3, über der zweiten Fläche 25 von gleicher Signalqualität wie auf der linken Seite über der ersten Fläche 23. Entsprechendes gilt für Positionierungen oberhalb der ersten Fläche 13 und der zweiten Fläche 15 in Fig. 2.

Die in Fig. 4 dargestellte Leiterplatte 31 weist an ihrer oberen ebenen Oberfläche eine Antennenstruktur auf, die ähnlich wie bei der Ausführungsform in Fig. 3 bei der ersten Fläche 23 einen konvexen Außenrand 34 hat, der im konkreten Ausführungsbeispiel z. B. parabolisch oder halb-elliptisch geformt ist. Ein innerer Bereich der Struktur ist jedoch von elektrisch leitfähigem Material dieser Antennenstruktur frei, was nicht ausschließt, dass in dem ausgesparten Bereich eine andere Antennenstruktur angeordnet ist. Aufgrund der Aussparung weist die Antennenstruktur 33 auch einen konkaven Innenrand auf. Der Außenrand 34 und der Innenrand 32 sind so gestaltet, dass zwischen ihnen ein streifenförmiger Bereich aus elektrisch leitendem Material vorhanden ist, der die Antennenstruktur 33 bildet. Dies gilt entsprechend nicht nur für die konkret in Fig. 4 gezeigte Form des Außenrandes und des Innenrandes. Vielmehr könnten der Außenrand und der Innenrand auch anders gekrümmt sein, z. B. halbkreisförmig verlaufen oder halb-oval.

Fig. 4 zeigt noch ein weiteres besonderes Merkmal der Formgestaltung der Antennenstruktur. Die beiden Ränder 32, 34 divergieren an den freien Enden des Streifens, der die Antennenstruktur bildet. In anderen Worten: Der Streifen wird in Richtung auf seine freien Enden breiter. Diese beiden freien Enden liegen am weitesten entfernt von der Massefläche 35, die auf der Rückseite, d. h. auf der unteren ebenen Oberfläche der Leiterplatte 31 aufgebracht ist. Diese Massenfläche 35 liegt einer Streifenleitung 36 an der oberen Oberfläche gegenüber, die dem elektrischen Anschluss der Antennenstruktur 33 dient. Die Massenfläche 35 weist einen geraden Rand an der Seite auf, die der durch den Rand 34 gebildeten Vorwölbung gegenüber steht. In der Draufsicht ist der gerade Rand der Massenfläche 35 von der Vorwölbung der Ränder 32, 34 beabstandet.

Unabhängig von der konkreten Form der Ränder der in Fig. 4 dargestellten Antennenstruktur, z. B. parabolisch, elliptisch, oval, wird es bevorzugt, dass die Antennenstruktur symmetrisch zu einer Mittelachse der geraden Streifenleitung 46 ist und dass daher die Streifenleitung 46 die Antennenstruktur in einem Punkt kontaktiert, von dem aus sich zwei gleich lange elektrisch leitende und gekrümmte Streifen erstrecken.

Auch bei der in Fig. 4 dargestellten Ausführungsform kann sich die Ladespule 2 an der Unterseite der Leiterplatte 31 befinden, und zwar entweder über einen Abstandshalter in einem Abstand zu der unteren Oberfläche befestigt sein oder, da es sich bei der elektrisch leitenden Fläche 35 auf der Unterseite der Leiterplatte 31 lediglich um eine Massefläche handelt, auch unmittelbar an der unteren Oberfläche der Leiterplatte 31.

Vorzugsweise ist die Ladespule 2 dabei - betrachtet in der Draufsicht der Fig. 4 - innerhalb des konkaven Innenrandes 32 der kelchartigen Antennenstruktur 33 angeordnet. Alternativ kann die Ladespule auch seitlich der kelchartigen Struktur 33, außerhalb des konvexen Außenrandes angeordnet sein. Wenn, wie beispielsweise in Fig. 9 dargestellt, mehrere kelchförmige Antennen vorhanden sind, ist vorzugsweise lediglich eine Ladespule vorgesehen, z. B. innerhalb des konkaven Innenrandes einer der kelchförmigen Antennen.

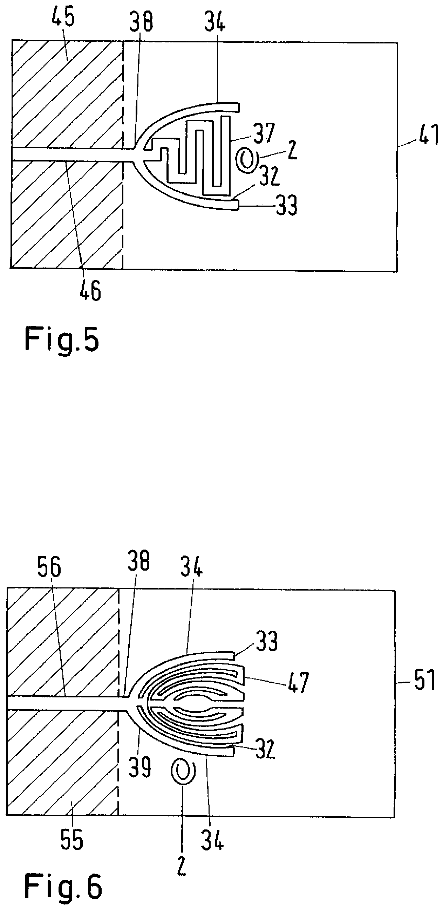

Fig. 5 zeigt eine Antennenstruktur 33 wie in Fig. 4, wobei auch ähnlich in Fig. 4 die Struktur durch eine gerade Streifenleitung 46 elektrisch angeschlossen ist. Wiederum befindet sich auf der gegenüberliegenden Oberfläche der Leiterplatte 41 eine Massenfläche 45.

Jedoch ist im ausgesparten Bereich innerhalb des konkaven Innenrandes 32 eine zweite Antennenstruktur 37 angeordnet, die mäanderförmig gestaltet ist. Elektrisch angeschlossen ist die zweite Antennenstruktur 37 an dem Punkt 38 der ersten Antennenstruktur 33, wo die gerade Streifenleitung 46 beginnt. Ausgehend von diesem Anschlusspunkt 38 mäandert die zweite Antennenstruktur 37 zwischen den beiden Streifen der ersten Antennenstruktur 33, wobei die Länge der einzelnen Abschnitte der zweiten Struktur 37, die sich zwischen dem Streifen der Struktur 33 erstrecken, mit zunehmender Entfernung von dem Anschlusspunkt 38 größer wird, da mehr Raum für diese Abschnitte zur Verfügung steht. Auf diese Weise wird der durch den ausgesparten Bereich zur Verfügung stehende Raum optimal genutzt. Wie oben bereits erwähnt, kommt es für die Wellenlängen der zu koppelnden Funkwellen auf die Länge des Streifens an. Durch optimale Nutzung des Raumes kann daher der längstmögliche Streifen in dem ausgesparten Bereich untergebracht werden. Dabei ist der Abstand der zwischen den Streifen der ersten Struktur 33 verlaufenden Streifen der zweiten Struktur 37 vorzugsweise konstant und ist auch vorzugsweise die Breite der Streifenabschnitte gleich. Der Abstand wird in einer Richtung bestimmt, die in Verlängerung der Längsachse der Anschluss-Streifenleitung 46 verläuft. In Fig. 5 verläuft diese Richtung, in der der Abstand gemessen wird, in horizontaler Richtung.

Die Ladespule 2 ist - in der Draufsicht der Fig. 5 - außerhalb des durch den konkaven Innenrand 32 definierten Innenraumes der Antennenstruktur 33 angeordnet, nahe der zweiten Struktur 37. Es kommt jedoch alternativ auf die Position außerhalb der kelchförmigen Struktur 33, neben dem konvexen Außenrand 34 in Frage, wie beispielsweise bei der im Folgenden anhand von Fig. 6 beschriebenen Ausführungsform, bei der allerdings die zweite Struktur innerhalb der ersten Struktur eine andere Gestaltung aufweist.

Fig. 6 zeigt eine Variante der in Fig. 5 dargestellten Anordnung. Wiederum ist der innerhalb der ersten Struktur 33 liegende, ausgesparte Bereich mit einer zweiten Struktur versehen. Die zweite Struktur 47 weist jedoch im Unterschied zu der Struktur 37 aus Fig. 5 zwei Streifen auf, die sich ausgehend vom Anschlusspunkt 38 und einer Gabelung beidseitig der Symmetrieachse, die in Verlängerung der Längsachse der Streifenleitung 46 verläuft, erstrecken. Beide Streifen sind labyrinthförmig, wobei die in wechselnden Richtungen verlaufenden Abschnitte entsprechend der durch den Rand der ausgesparten Fläche vorgegebenen Krümmung gekrümmt verlaufen. Dabei sind vorzugsweise die Abstände der in wechselnden Richtungen verlaufenden Längsabschnitte der Streifen in der Nähe des Anschlusspunktes 38 kleiner als im Bereich der freien Enden der Streifen der ersten Struktur 33.

In Fig. 6 ist die Massefläche auf der gegenüberliegenden Oberfläche der Leiterplatte 51 mit dem Bezugszeichen 55 bezeichnet.

Auch Fig. 7 zeigt eine Variante der Fig. 5 und der Fig. 6, bei der die erste Antennenstruktur 33 in gleicher Weise ausgestaltet ist und bei der diese Struktur über eine gerade Streifenleitung 66 elektrisch angeschlossen ist. Die Massefläche auf der gegenüberliegenden Oberfläche des Trägers 61 ist mit dem Bezugszeichen 65 bezeichnet.

Die zweite Struktur 57 erstreckt sich sowohl in dem ausgesparten Bereich innerhalb des Innenrandes 32 der ersten Struktur 33, als auch in den äußeren Bereichen außerhalb des Außenrandes 34 der ersten Struktur 33. Wiederum, ähnlich wie bei der Ausführungsform von Fig. 6, erstreckt sich die zweite Struktur 57 ausgehend von dem Anschlusspunkt 38 in den ausgesparten Bereich hinein bis zu einer Gabelung 39. Dort beginnen zwei Streifen der zweiten Struktur 57, die sich symmetrisch zu der Verlängerung der Längsachse der Streifenleitung 66 beidseits durch den ausgesparten Bereich erstrecken. Zunächst folgen die Streifen dem Verlauf der Streifen der ersten Struktur 33, bis sie das freie Ende der Streifen der ersten Struktur 33 erreicht haben. Im folgenden Verlauf der Streifen der zweiten Struktur 57 erstrecken sich diese nach außen in Richtung des Bereiches, der außerhalb des Außenrandes 34 der ersten Struktur 33 liegt. Dort setzen Längsabschnitte der Streifen der zweiten Struktur 57 an, die sich in Richtung der Massefläche 65 erstrecken. Optional kann jeweils zumindest ein weiterer Längsabschnitt des Streifens dort ansetzen, so dass in dem Bereich außerhalb der Außenränder 34 eine Mäanderform entsteht. Anders als in Fig. 7 dargestellt, können noch weitere Längsabschnitte in diesem Außenbereich mäanderförmig anschließen.

Die in Fig. 5 bis 7 dargestellte erste Struktur 33 kann, wie bereits oben zu der Struktur 33 in Fig. 4 erwähnt, anders geformt sein, z. B. halbkreisförmig, halboval, halb-elliptisch.

Die Ladespule 2 ist wiederum ähnlich wie bei der Ausführungsform der Fig. 4. innerhalb der kelchförmigen ersten Struktur 33 angeordnet, wenn man die Draufsicht betrachtet. Dies ist möglich, weil auch innerhalb der konkaven Innenränder der zweiten Struktur 57 ein Freiraum bleibt, in dem sich kein elektrisch leitendes Material der Schicht befindet.

Fig. 9 zeigt eine Platine 101, die eine Mehrzahl von Antennen 102a bis 102e trägt. In dem Ausführungsbeispiel (wie auch vorzugsweise sonst) sind die Antennen 102 gleichartig. Sie dienen dazu, eine Übertragung von Funksignalen über eine größere Fläche zu ermöglichen. Wird ein Funkgerät, z. B. ein Mobiltelefon, über der Platine 101 positioniert, kann eine Funkverbindung von dem Funkgerät zu verschiedenen Antennen 102 aufgebaut werden. Allerdings wird die Funkverbindung zu einer oder zwei der Antennen 102 besser, d. h. mit geringeren Signalübertragungsverlusten bzw. mit geringerer Koppeldämpfung funktionieren als bei den anderen Antennen 102.

Jede der Antennen 102 ist über eine Anschlussleitung 103a bis 103e mit einem Multiplex-Schalter 104 verbunden. Der Multiplex-Schalter 104 weist außerdem einen Anschluss 104a auf. Mit diesem Anschluss 104a kann wahlweise jede der Anschlussleitungen 103a bis 103e verbunden werden. Ferner ist mit dem Anschluss 104a ein Detektor 105 zur Detektion der Signalstärke bzw. Signalqualität verbunden, die über den Anschluss 104a übertragen wird. Der Detektor 105 ist in dem Ausführungsbeispiel mit einem Analog/Digitalwandler 107 verbunden, der das Detektorsignal des Detektors 105 in ein digitales Signal wandelt und einem digitalen Datenprozessor 108 zuführt. Dieser stellt anhand des empfangenen digitalen Signals die Signalqualität fest. Außerdem erhält der Prozessor 108 von dem Multiplex-Schalter 104 die Information über den momentanen Schaltzustand des Schalters 104, d. h. welche Anschlussleitung 103 momentan mit dem Anschluss 104a verbunden ist.

Beim beginnenden Betrieb eines Funkgeräts über eine Kopplung, die mithilfe der Antennen 102 auf der Platine 101 stattfindet, schaltet der Multiplex-Schalter 104 nacheinander alle Verbindungen zwischen dem Anschluss 104a und den Anschlussleitungen 103. Für jeden dieser Schaltzustände detektiert der Detektor 105 die entsprechende Signalqualität. Der Prozessor 108 ermittelt den Schaltzustand mit der besten Signalqualität und steuert den Multiplex-Schalter 104 so an, dass dieser während des weiteren Kopplungsbetriebes den Schaltzustand mit der ermittelten besten Signalqualität herstellt und aufrechterhält.

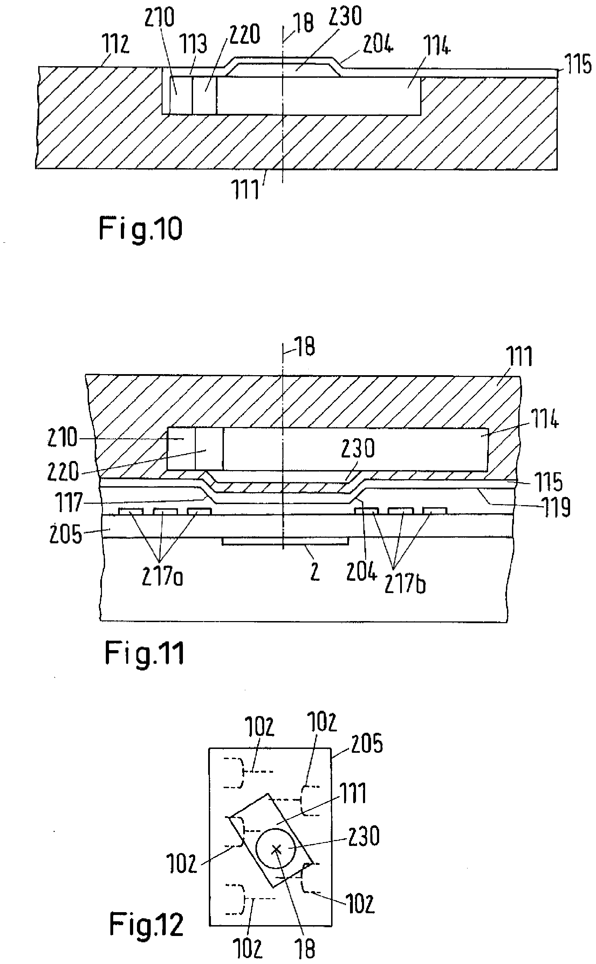

Der Vertikalschnitt durch einen Teil eines Mobiltelefons 111, der in Fig. 10 gezeigt ist, lässt ein Gehäuse 112 erkennen, welches ein Fach 113 zur Aufnahme eines Energiespeichers 114 aufweist. Bei dem Energiespeicher 114 handelt es sich z.B. um einen Lithium-Ionen-Akkumulator oder um einen anderen elektrochemischen Energiespeicher.

Das Fach 113 ist mit einem Deckel 115 verschlossen. Der Deckel 115 weist einen kegelstumpfförmigen Vorsprung 204 auf, der sich nach oben verjüngt und der unten, innenseitig einen entsprechend geformten kegelstumpfförmigen Hohlraum aufweist. In diesen Hohlraum ragt eine sekundärseitige Antenne 230, z.B. eine Spule aus einer Vielzahl von Kupferdrahtwindungen, hinein. Die sekundärseitige Antenne 230 ist an einem für die Erfindung modifizierten Exemplar des Energiespeichers 114 befestigt. Daher kann ein konventioneller Energiespeicher, der in der Regel quaderförmig ist, gegen einen solchen Energiespeicher 114 ausgewechselt werden, wobei außerdem noch der üblicherweise ebene Batteriefachdeckel durch den in Fig. 10 dargestellten Deckel 115 ausgewechselt wird.

Außerdem weist der Energiespeicher 114 die üblichen elektrischen Kontakte 210 zum elektrischen Kontaktieren entsprechender Kontakte des Mobiltelefons auf. Weiterhin ist in den Energiespeicher 114 eine elektrische Ladeschaltung 220 integriert, die es ermöglicht, die von der sekundärseitigen Antenne 230 aufgrund der empfangenen elektromagnetischen Wellen durch Induktion erzeugte elektrische Energie in den eigentlichen Energiespeicher, z.B. den elektrochemischen Energiespeicher, zu laden.

Fig. 11 zeigt ebenfalls einen vertikalen Schnitt, wobei jedoch der in Fig. 10 dargestellte Teil des Mobiltelefons 111 anders orientiert ist. Es liegt an einer Anlagefläche 119 einer Anordnung zum Ankoppeln des Mobiltelefons an Einrichtungen des Kraftfahrzeugs an, wobei der kegelstumpfförmige Vorsprung 204 des Deckels 115 und die sekundärseitige Antenne 230 mit ihrer Rotationsachse nach unten ausgerichtet sind. Sie ragen in eine entsprechende kegelstumpfförmige Aussparung 117 der Anordnung 5 hinein. Weitere Mittel, um insbesondere die Funkantenne des Mobiltelefons 111 an Einrichtungen (z.B. Freisprecheinrichtung, Außenantenne des Kraftfahrzeugs) anzukoppeln, sind in den Figuren nicht dargestellt.

Fig. 11 zeigt unmittelbar unterhalb der Aussparung 117 einen plattenförmigen Träger (205), an dessen oberen Oberfläche Antennenstrukturen 217a, 217b von zwei verschiedenen Antennen angeordnet sind. Auf der Unterseite des Trägers 205 ist eine primärseitige Ladespule 2 vorgesehen zur Erzeugung der elektromagnetischen Wellen, die von der sekundärseitigen Antenne 230 zu empfangen sind. Die primärseitige Ladespule 2 ist vorzugsweise durch eine Vielzahl von Windungen eines elektrischen Leiters (z.B. Kupferdraht) realisiert, wobei die Rotationsachse der Windungen mit der Rotationsachse 18 der kegelstumpfförmigen Aussparung 117 übereinstimmt.

In der Draufsicht von Fig. 12 ist das Mobiltelefon 111 in einer beliebigen Drehposition um die Rotationsachse der sekundärseitigen Antenne 230 dargestellt, die mit der Rotationsachse der Aussparung 117 zusammenfällt. Dabei befindet sich die primärseitige Antenne 230 in der in Fig. 11 dargestellten Position innerhalb der Aussparung 117. Obwohl die sekundärseitige Antenne 230 in der Draufsicht nicht zu erkennen wäre, ist sie in Fig. 12 dargestellt, um das Ausführungsbeispiel der Erfindung zu erläutern. Das Mobiltelefon 111 könnte jede andere Drehstellung um die Rotationsachse 18 einnehmen, wobei jedoch die sekundärseitige Antenne 230 in jedem Fall innerhalb der Aussparung 117 oder unmittelbar oberhalb der Aussparung 117 positioniert ist und dabei die Rotationsachsen des Vorsprungs 204 des Deckels 115 und der Aussparung 117 übereinstimmen.

Durch gestrichelte Linien ist außerdem die Lage von fünf Antennen 102, z. B. in einer Anordnung wie in Fig. 9, angedeutet. Die Antennen 102 befinden sich wie in Fig. 11 gezeigt auf der oberen Oberfläche des Trägers 205, sind aber nicht sichtbar (außer bei Verwendung von transparentem Abdeckungsmaterial), da darüber noch Abdeckungsmaterial vorhanden ist, das die Anlagefläche bildet und die Aussparung 117 aufweist. Dabei kann das die Aussparung aufweisende Abdeckungsmaterial unmittelbar mit dem elektrisch leitenden Material der Antennen in Kontakt sein. Dies gilt auch für andere Ausführungsformen.

## Patentansprüche

1. Anordnung zur drahtlosen Ankopplung eines Funkgeräts (9), insbesondere eines Mobiltelefons, über eine Funkverbindung, insbesondere an eine Einrichtung eines Kraftfahrzeugs oder an eine stationäre Funkeinrichtung, wobei
- die Anordnung eine Anlagefläche (7) zum Anlegen des Funkgeräts (9) aufweist,
- die Anordnung eine Antenne (33) aufweist, um die drahtlose Ankopplung des Funkgeräts herzustellen und aufrechtzuerhalten, oder eine Mehrzahl von nebeneinander positionierten Antennen (102) aufweist, die wahlweise betreibbar sind, um die drahtlose Ankopplung des Funkgeräts (9) herzustellen und aufrechtzuerhalten,
- die Anlagefläche (7) eine um eine senkrecht zur Anlagefläche (7) verlaufende Rotationsachse (18) rotationssymmetrische Aussparung (117) aufweist, sodass ein Funkgerät (111) mit einem Vorsprung (204), der in die Aussparung (117) eingreift, bei unterschiedlichen Drehstellungen bezüglich der Rotationsachse (18) eine Funkverbindung zu der Antenne (33) oder zu einer Antenne (102) der Mehrzahl von Antennen betreiben kann und sodass alternativ ein Funkgerät (9), das nicht in die Aussparung (117) eingreift aber an der Anlagefläche (7) anliegt, innerhalb eines durch die Anlagefläche (7) und die Anordnung begrenzten Raumes sich in beliebiger Orientierung und beliebiger Position befinden kann und jeweils eine Funkverbindung zu der Antenne (33) oder zu einer Antenne (102) der Mehrzahl von Antennen betreiben kann,
- die Anordnung eine primärseitige Ladespule (2) zur Erzeugung eines elektromagnetischen Feldes aufweist, das von einer sekundärseitigen Ladeeinrichtung (230) des Funkgeräts (111) empfangbar und zur Ladung eines Energiespeichers (114) des Funkgeräts (111) nutzbar ist,
- die primärseitige Ladespule (2) derart relativ zu der Rotationsachse (18) ausgerichtet ist, dass die magnetische Flussdichte des von der primärseitigen Ladespule (2) erzeugten elektromagnetischen Feldes in Richtung der Rotationsachse (18) maximal ist,
**dadurch gekennzeichnet, dass**
- die Antenne (33) oder die Antennen (102) jeweils durch zumindest eine elektrisch leitende Schicht gebildet ist/sind, die von einem Träger aus elektrisch nicht leitendem Material getragen werden, wobei sich die Schicht(en) entlang der Anlagefläche erstreckt/erstrecken, und
- die elektrisch leitende(n) Schicht(en) zumindest eines Teils der Antennen in kleinerem oder gleichem Abstand zu der Anlagefläche angeordnet ist/sind als die Ladespule (2).

2. Anordnung nach Anspruch 1, wobei bezüglich der Kopplungsdämpfung der möglichen Funkverbindungen zwischen der Funkantenne des Funkgeräts einerseits und der Antenne (33) oder einer Antenne der Mehrzahl der Antennen andererseits das Folgende gilt:
a. die Funkverbindung zwischen der Funkantenne und der Antenne oder einer anderen Antenne der Mehrzahl von Antennen bei beliebiger Position und/oder Ausrichtung des Funkgeräts relativ zu der Anordnung im Wesentlichen die gleiche Kopplungsdämpfung erfährt, wenn das Funkgerät an der Anlagefläche anliegt, unabhängig davon, ob der Vorsprung in die Aussparung eingreift oder nicht und/oder
b. die Kopplungsdämpfung der Funkverbindung einen für den gesamten Bereich von möglichen Positionen und Ausrichtungen des Funkgerätes, während es an der Anlagefläche anliegt, vorgegebenen Maximalwert nicht überschreitet, unabhängig davon, ob der Vorsprung in die Aussparung eingreift oder nicht.

3. Anordnung nach Anspruch 1 oder 2, wobei die wobei die Anordnung ausgestaltet ist, jeweils diejenige Antenne der Mehrzahl von Antennen auszuwählen, über die die Funkverbindung zu der Funkantenne des Funkgeräts die geringste Kopplungsdämpfung erfährt.

4. Anordnung nach einem der vorhergehenden Ansprüche, wobei die elektrisch leitende(n) Schicht(en) in einem räumlichen Bereich verlaufen, der durch zwei zueinander parallele Ebenen begrenzt ist, welche parallel zu der Anlagefläche sind.

5. Anordnung nach einem der vorhergehenden Ansprüche, wobei die elektrisch leitende(n) Schicht(en) streifenförmig ist/sind.

6. Anordnung nach einem der vorhergehenden Ansprüche, wobei der Träger (1) ein plattenförmiger Träger ist, an dessen einen Seite die elektrisch leitende(n) Schicht(en) zumindest einer Antenne (3) angeordnet ist/sind und an dessen gegenüberliegenden, weiter von der Anlagefläche entfernten Seite die Ladespule angeordnet ist.

7. Anordnung nach einem der vorhergehenden Ansprüche, wobei
- der Träger (1) eine erste ebene Oberfläche und eine auf der gegenüberliegenden Seite des Trägers (1) liegende zweite ebene Oberfläche aufweist, die parallel zu der ersten Oberfläche verläuft,
- auf der ersten Oberfläche eine erste elektrisch leitende Schicht aufgebracht ist, die beim Betrieb der Anordnung als Kopplungsantenne Funkwellen zu einer Antenne des Funkgerätes emittiert und/oder von dieser empfängt und dadurch das Funkgerät ankoppelt,
- die erste elektrisch leitende Schicht eine erste Fläche (13) aufweist, die einen konvexen Außenrand aufweist,
- die erste Fläche (13) über eine als Streifenleitung (14) ausgeführte, vorzugsweise gerade Anschlussleitung, die Teil der ersten elektrisch leitenden Schicht ist, elektrisch leitend mit einem ersten Kontakt eines Anschlusses zum Anschließen der Hochfrequenzleitung verbunden ist, wobei sich die Streifenleitung (14) von dem konvexen Außenrand bis zu einem Randbereich des Trägers (1) erstreckt,
- eine zweite elektrisch leitende Schicht auf der zweiten Oberfläche aufgebracht ist,
- die zweite elektrisch leitende Schicht eine zweite Fläche (15) aufweist, die einen konvexen Außenrand aufweist,
- der Bereich der zweiten elektrisch leitenden Schicht, der die zweite Fläche (15) aufweist, auf einem Teilbereich der zweiten Oberfläche aufgebracht ist, wobei von dem Teilbereich aus gesehen auf der gegenüberliegenden Seite des Trägers (1) die Streifenleitung (14) auf der ersten Oberfläche aufgebracht ist, und
- die zweite Fläche (15) elektrisch leitend mit einem zweiten Kontakt des Anschlusses verbunden ist,
- die Kopplungsantenne die Antenne oder eine der Antennen gemäß Anspruch 1 ist.

8. Anordnung nach einem der vorhergehenden Ansprüche, wobei
- der Träger (1) zumindest eine erste ebene Oberfläche aufweist,
- auf der ersten Oberfläche die elektrisch leitende Schicht oder eine der elektrisch leitenden Schichten aufgebracht ist, die beim Betrieb der Anordnung als Kopplungsantenne Funkwellen zu einer Funkantenne (8) des Funkgerätes emittiert und/oder von dieser empfängt und dadurch das Funkgerät (9) ankoppelt,
- die elektrisch leitende Schicht auf der ersten Oberfläche eine erste Fläche (23) aufweist, die einen konvexen Außenrand aufweist,
- die elektrisch leitende Schicht auf der ersten Oberfläche eine zweite Fläche (25) aufweist, die einen konvexen Außenrand aufweist,
- die erste (23) und die zweite (25) Fläche auf verschiedenen Teilbereichen der ersten Oberfläche aufgebracht sind, wobei die erste (23) und die zweite (25) Fläche an ihren konvexen Rändern über einen Balun (24) an die Hochfrequenz-Leitung angeschlossen sind,
- die Kopplungsantenne eine der Antennen gemäß Anspruch 1 ist.

9. Verfahren zur drahtlosen Ankopplung eines Funkgeräts (111), insbesondere eines Mobiltelefons, über eine Funkverbindung, insbesondere an eine Einrichtung eines Kraftfahrzeugs oder an eine stationäre Funkeinrichtung, wobei
- das Funkgerät (111) an eine Anlagefläche (7) angelegt wird,
- die Anlagefläche (7) eine um eine senkrecht zur Anlagefläche (7) verlaufende Rotationsachse rotationssymmetrische Aussparung (117) aufweist, wobei zur Anlage des Funkgeräts an die Anlagefläche ein Vorsprung (204) des Funkgeräts (111) in die Aussparung (117) eingebracht wird und eine von mehreren möglichen unterschiedlichen Drehstellungen bezüglich der Rotationsachse (18) eingestellt wird oder alternativ das Funkgerät (111) oder ein anderes Funkgerät (9) innerhalb einer durch die Anlagefläche (7) und optional durch weitere Teile einer Kopplungsanordnung begrenzten Raumes in beliebiger Orientierung und beliebiger Position an die Anlagefläche (7) angelegt wird,
- zwischen einer Funkantenne (8) des angelegten Funkgeräts (9; 111)
o und einer an der Anlagefläche (7) angeordneten Antenne (3) eine Funkverbindung betrieben wird, wobei auch in den anderen Drehstellungen oder in anderen Orientierungen und Positionen eine Funkverbindung zwischen der Funkantenne (8) und der an der Anlagefläche (7) angeordneten Antenne (3) betreibbar wäre und ggf. auch betrieben wird, oder
o und einer ausgewählten Antenne, die aus einer Mehrzahl von entlang der Anlagefläche nebeneinander positionierten Antennen (102) ausgewählt wird, eine Funkverbindung betrieben wird, wobei auch in den anderen Drehstellungen oder in anderen Orientierungen und Positionen eine Funkverbindung zwischen der Funkantenne (8) einerseits und der ausgewählten Antenne (102) oder einer anderen Antenne, die aus der Mehrzahl von entlang der Anlagefläche nebeneinander positionierten Antennen (102) ausgewählt wird, andererseits betreibbar wäre und ggf. auch betrieben wird,
- während ein Vorsprung (204) des Funkgeräts (111) in der Aussparung (117) angeordnet ist, eine sekundärseitige Empfangseinrichtung (230) des Funkgeräts (111) von einer primärseitigen Ladespule (2) der Anordnung durch ein elektromagnetisches Feld induktiv mit Energie versorgt wird, während die Funkverbindung betrieben wird, wobei die primärseitige Ladespule (2) derart relativ zu der Rotationsachse (18) ausgerichtet ist, dass die magnetische Flussdichte des von der primärseitigen Ladespule (2) erzeugten elektromagnetischen Feldes in Richtung der Rotationsachse (18) maximal ist,
**dadurch gekennzeichnet, dass**
- die Antenne (33) oder die Antennen (102) jeweils durch zumindest eine elektrisch leitende Schicht gebildet ist/sind, die von einem Träger aus elektrisch nicht leitendem Material getragen werden, wobei sich die Schicht(en) entlang der Anlagefläche erstreckt/erstrecken, und
- die elektrisch leitende(n) Schicht(en) zumindest eines Teils der Antennen in kleinerem oder gleichem Abstand zu der Anlagefläche angeordnet ist/sind als die Ladespule (2).

10. Verfahren nach Anspruch 9, wobei bezüglich der Kopplungsdämpfung der möglichen Funkverbindungen zwischen der Funkantenne des Funkgeräts einerseits und der Antenne (33) oder einer Antenne der Mehrzahl der Antennen andererseits das Folgende gewährleistet wird:
a. die Funkverbindung zwischen der Funkantenne und der Antenne oder einer anderen Antenne der Mehrzahl von Antennen bei beliebiger Position und/oder Ausrichtung des Funkgeräts relativ zu der Anordnung im Wesentlichen die gleiche Kopplungsdämpfung erfährt, wenn das Funkgerät an der Anlagefläche anliegt, unabhängig davon, ob der Vorsprung in die Aussparung eingreift oder nicht und/oder
b. die Kopplungsdämpfung der Funkverbindung einen für den gesamten Bereich von möglichen Positionen und Ausrichtungen des Funkgerätes, während es an der Anlagefläche anliegt, vorgegebenen Maximalwert nicht überschreitet, unabhängig davon, ob der Vorsprung in die Aussparung eingreift oder nicht.

11. Verfahren zur Herstellung einer Anordnung zur drahtlosen Ankopplung eines Funkgeräts (9), insbesondere eines Mobiltelefons, über eine Funkverbindung, insbesondere an eine Einrichtung eines Kraftfahrzeugs oder an eine stationäre Funkeinrichtung, wobei
- eine Anlagefläche (7) zum Anlegen des Funkgeräts (9) vorgesehen wird,
- eine Antenne (3) vorgesehen wird, um die drahtlose Ankopplung des Funkgeräts herzustellen und aufrechtzuerhalten, oder entlang der Anlagefläche eine Mehrzahl von nebeneinander positionierten Antennen (102) angeordnet wird, die wahlweise betreibbar sind, um die drahtlose Ankopplung des Funkgeräts (9) herzustellen und aufrechtzuerhalten,
- in der Anlagefläche (7) eine um eine senkrecht zur Anlagefläche (7) verlaufende Rotationsachse (18) rotationssymmetrische Aussparung (117) vorgesehen wird, sodass ein Funkgerät (111) mit einem Vorsprung (204), der in die Aussparung eingreift, bei unterschiedlichen Drehstellungen bezüglich der Rotationsachse eine Funkverbindung zu der Antenne oder zu einer Antenne der Mehrzahl von Antennen betreiben kann und sodass alternativ ein Funkgerät (9), das nicht in die Aussparung eingreift aber an der Anlagefläche anliegt, innerhalb einer durch die Anlagefläche und durch die Anordnung begrenzten Raumes sich in beliebiger Orientierung und beliebiger Position befinden kann und jeweils eine Funkverbindung zu der Antenne (3) oder zu einer Antenne der Mehrzahl von Antennen (102) betreiben kann,
- eine primärseitige Ladespule (2) vorgesehen wird, zur Erzeugung eines elektromagnetischen Feldes, das von einer sekundärseitigen Ladeeinrichtung (230) des Funkgeräts (111) empfangbar und zur Ladung eines Energiespeichers (114) des Funkgeräts (111) nutzbar ist,
- die primärseitige Ladespule (2) derart relativ zu der Rotationsachse (18) ausgerichtet wird, dass die magnetische Flussdichte des von der primärseitigen Ladespule (2) erzeugten elektromagnetischen Feldes in Richtung der Rotationsachse (18) maximal ist,
**dadurch gekennzeichnet, dass**
- die Antenne (33) oder die Antennen (102) jeweils durch elektrisch leitende Schichten gebildet wird/werden, die von einem Träger aus elektrisch nicht leitendem Material getragen werden, und
- die elektrisch leitenden Schichten zumindest eines Teils der Antennen in kleinerem oder gleichem Abstand zu der Anlagefläche angeordnet werden als die Ladespule (2).

12. Verfahren nach Anspruch 11, wobei bezüglich der Kopplungsdämpfung der möglichen Funkverbindungen zwischen der Funkantenne des Funkgeräts einerseits und der Antenne (33) oder einer Antenne der Mehrzahl der Antennen andererseits das Folgende gilt:
a. die Funkverbindung zwischen der Funkantenne und der Antenne oder einer anderen Antenne der Mehrzahl von Antennen erfährt bei beliebiger Position und/oder Ausrichtung des Funkgeräts relativ zu der Anordnung im Wesentlichen die gleiche Kopplungsdämpfung, wenn das Funkgerät an der Anlagefläche anliegt, unabhängig davon, ob der Vorsprung in die Aussparung eingreift oder nicht und/oder
b. die Kopplungsdämpfung der Funkverbindung überschreitet einen für den gesamten Bereich von möglichen Positionen und Ausrichtungen des Funkgerätes, während es an der Anlagefläche anliegt, vorgegebenen Maximalwert nicht, unabhängig davon, ob der Vorsprung in die Aussparung eingreift oder nicht.

## Claims

1. An arrangement for wirelessly coupling a radio device (9), in particular a mobile telephone, via a radio link, in particular to a device of a motor vehicle or to a stationary radio device, wherein
- the arrangement has a contact surface (7) for placing the radio device (9) thereon,
- the arrangement has an antenna (33) in order to produce and maintain the wireless coupling of the radio device, or has a plurality of antennas (102) positioned side by side which can be selectively operated in order to produce and maintain the wireless coupling of the radio device (9),
- the contact surface (7) has a rotationally symmetrical recess (117) extending around an axis of rotation (18) perpendicular to the contact surface (7) such that, at different rotational positions relative to the axis of rotation (18), a radio device (111) having a projection (204) which engages in the recess (117) can operate a radio link to the antenna (33), or to one antenna (102) of the plurality of antennas, and such that alternatively a radio device (9) which does not engage in the recess (117) but rests against the contact surface (7) can be located in any orientation and any position within a space delimited by the contact surface (7) and the arrangement and can operate a respective radio link to the antenna (33), or to one antenna (102) of the plurality of antennas,
- the arrangement comprises a charging coil (2) on a primary side for generating an electromagnetic field which can be received by a charging unit (230) of the radio device (111) on a secondary side and can be used for charging an energy storage (114) of the radio device (111),
- the charging coil (2) on the primary side is oriented relative to the axis of rotation (18) such that the magnetic flux density of the electromagnetic field generated by the charging coil (2) on the primary side is at a maximum in the direction of the axis of rotation (18)
**characterized in that**
- the antenna (33) or the antennas (102) is/are in each case formed by at least one electrically conductive layer that is borne by a substrate made of electrically non-conductive material, wherein the layer(s) extends/extend along the contact surface, and,
- the electrically conductive layer(s) of at least a part of the antennas is/are disposed with respect to the contact surface at a distance less than or equal to that of the charging coil (2).

2. The arrangement according to claim 1, wherein with respect to the coupling damping of the possible radio links between the radio antenna of the radio device, on the one hand, and the antenna (33) or one antenna of the plurality of antennas, on the other hand, the following applies:
a. the radio link between the radio antenna and the antenna or another antenna of the plurality of antennas, at any position and/or orientation of the radio device relative to the arrangement, experiences essentially the same coupling damping when the radio device rests against the contact surface, regardless of whether the projection engages in the recess or not, and/or,
b. the coupling damping of the radio link does not exceed a prespecified maximum value for the entire range of possible positions and orientations of the radio device while it rests against the contact surface, regardless of whether the projection engages in the recess or not.

3. The arrangement according to claim 1 or 2, wherein the arrangement is embodied to select the antenna of the plurality of antennas via which the radio link to the radio antenna of the radio device experiences the lowest coupling damping.

4. The arrangement according to any of the preceding claims, wherein the electrically conductive layer(s) extend in a spatial region that is delimited by two parallel planes that are parallel to the contact surface.

5. The arrangement according to any of the preceding claims, wherein the electrically conductive layer(s) is/are strip-like.

6. The arrangement according to any of the preceding claims, wherein the substrate (1) is a plate-like substrate, on the one side of which the electrically conductive layer(s) of at least one antenna (3) is/are arranged, and on the opposing side of which, the opposing side being further from the contact surface, the charging coil is arranged.

7. The arrangement according to any of the preceding claims, wherein
- the substrate (1) has a first planar surface and a second planar surface that is on the opposing side of the substrate (1) and that extends parallel to the first surface,
- a first electrically conductive layer is applied to the first surface and during operation of the arrangement, as a coupling antenna, emits radio waves to an antenna of the radio device and/or receives radio waves therefrom, thereby coupling the radio device,
- the first electrically conductive layer has a first surface area (13) that has a convex outer edge,
- the first surface area (13), via a preferably straight connecting line, embodied as a strip line (14) and which is part of the first electrically conductive layer, is connected in an electrically conductive manner to a first contact of a connector for connecting the high frequency line, wherein the strip line (14) extends from the convex outer edge to an edge region of the substrate (1),
- a second electrically conductive layer is applied to the second surface,
- the second electrically conductive layer has a second surface area (15) that has a convex outer edge,
- the region of the second electrically conductive layer that has the second surface area (15) is applied to a sub-region of the second surface, wherein seen from the sub-region on the opposing side of the substrate (1) the strip line (14) is applied to the first surface, and,
- the second surface area (15) is connected in an electrically conductive manner to a second contact of the connector,
- the coupling antenna is the antenna or one of the antennas according to claim 1.

8. The arrangement according to any of the preceding claims, wherein
- the substrate (1) has at least a first planar surface,
- applied on the first surface is the electrically conductive layer or one of the electrically conductive layers that during operation of the arrangement emits, as a coupling antenna, radio waves to a radio antenna (8) of the radio device and/or receives radio waves therefrom and thereby is coupled to the radio device (9),
- the electrically conductive layer on the first surface has a first surface area (23) that has a convex outer edge,
- the electrically conductive layer on the first surface has a second surface area (25) that has a convex outer edge,
- the first (23) and the second (25) surface areas are applied to different sub-regions of the first surface, wherein at their convex edges the first surface area (23) and the second surface area (25) are connected to the high frequency line via a balun (24),
- the coupling antenna is one of the antennas according to claim 1.

9. A method for wirelessly coupling a radio device (111), in particular a mobile telephone, via a radio link, in particular to a device of a motor vehicle or to a stationary radio device, wherein
- the radio device (111) is placed against a contact surface (7),
- the contact surface (7) has a rotationally symmetrical recess (117) extending around an axis of rotation perpendicular to the contact surface (7) wherein for placing the radio device against the contact surface, a projection (204) of the radio device (111) is inserted into the recess (117) and one of several possible different rotational positions relative to the axis of rotation (18) is set or alternatively the radio device (111) or another radio device (9) is placed in any orientation and any position against the contact surface (7) within a space delimited by the contact surface (7) and optionally by additional parts of a coupling arrangement,
- between a radio antenna (8) of the placed radio device (9, 11)
- and an antenna (3) arranged on the contact surface (7), a radio link is operated, wherein a radio link would also be operatable and possibly is also operated in the other rotational positions or in other orientations and positions, between the radio antenna (8) and the antenna (3) arranged on the contact surface (7), or
- and a selected antenna that is selected from a plurality of antennas (102) positioned side by side along the contact surface, a radio link is operated, wherein a radio link would also be operatable and possibly is also operated in the other rotational positions or in other orientations and positions, between the radio antenna (8) on the one hand and the selected antenna (102) or another antenna that is selected from the plurality of antennas (102) positioned side by side along the contact surface,
- while a projection (204) of the radio device (111) is arranged in the recess (117), a receiving device (230) of the radio device (111) on a secondary side is supplied with energy in an inductive manner by a charging coil (2) of the arrangement on a primary side using an electromagnetic field, while the radio link is operated, wherein the charging coil (2) on the primary side is oriented relative to the axis of rotation (18) such that the magnetic flux density of the electromagnetic field generated by the charging coil (2) on the primary side is at a maximum in the direction of the axis of rotation (18),
**characterized in that**
- the antenna (33) or antennas (102) is/are in each case formed by at least one electrically conductive layer that is borne by a substrate made of electrically non-conductive material, wherein the layer(s) extends/extend along the contact surface, and
- the electrically conductive layer(s) of at least a part of the antennas is/are disposed with respect to the contact surface at a distance less than or equal to that of the charging coil (2).

10. The method according to claim 9, wherein with respect to the coupling damping of the possible radio links between the radio antenna of the radio device, on the one hand, and the antenna (33) or one antenna of the plurality of antennas, on the other hand, the following is provided:
a. the radio link between the radio antenna and the antenna or another antenna of the plurality of antennas, at any position and/or orientation of the radio device relative to the arrangement, experiences essentially the same coupling damping when the radio device rests against the contact surface, regardless of whether the projection engages in the recess or not, and/or,
b. the coupling damping of the radio link does not exceed a prespecified maximum value for the entire range of possible positions and orientations of the radio device while it rests against the contact surface, regardless of whether the projection engages in the recess or not.

11. A method for producing an arrangement for wirelessly coupling a radio device (9), in particular a mobile telephone, via a radio link, in particular to a device of a motor vehicle or to a stationary radio device, wherein
- a contact surface (7) is provided for placing the radio device (9) thereon,
- an antenna (3) is provided in order to produce and maintain the wireless coupling of the radio device, or a plurality of antennas (102) positioned side by side is arranged along the contact surface and can be selectively operated in order to produce and maintain the wireless coupling of the radio device (9),
- it is provided in the contact surface (7) a rotationally symmetrical recess (117) extending around an axis of rotation (18) perpendicular to the contact surface (7) such that, at different rotational positions relative to the axis of rotation, a radio device (111) having a projection (204) which engages in the recess can operate a radio link to the antenna or to one antenna of the plurality of antennas, and such that alternatively a radio device (9) which does not engage in the recess but rests against the contact surface can be located in any orientation and any position within a space delimited by the contact surface and the arrangement and can operate a respective radio link to the antenna (3), or to one antenna of the plurality of antennas (102),
- a charging coil (2) is provided on a primary side for generating an electromagnetic field which can be received by a charging unit (230) of the radio device (111) on a secondary side and can be used for charging an energy storage (114) of the radio device (111),
- the charging coil (2) on the primary side is oriented relative to the axis of rotation (18) such that the magnetic flux density of the electromagnetic field generated by the charging coil (2) on the primary side is at a maximum in the direction of the axis of rotation (18),
**characterized in that**
- the antenna (33) or antennas (102) is/are in each case formed by electrically conductive layers that are borne by a substrate made of electrically non-conductive material, and
- the electrically conductive layers of at least a part of the antennas are disposed with respect to the contact surface at a distance less than or equal to that of the charging coil (2).

12. The method according to claim 11, wherein with respect to the coupling damping of the possible radio links between the radio antenna of the radio device, on the one hand, and the antenna (33) or one antenna of the plurality of antennas, on the other hand, the following applies:
a. the radio link between the radio antenna and the antenna or another antenna of the plurality of antennas, at any position and/or orientation of the radio device relative to the arrangement, experiences essentially the same coupling damping when the radio device rests against the contact surface, regardless of whether the projection engages in the recess or not, and/or,
b. the coupling damping of the radio link does not exceed a prespecified maximum value for the entire range of possible positions and orientations of the radio device while it rests against the contact surface, regardless of whether the projection engages in the recess or not.

## Revendications

1. Agencement de couplage sans fil d'un appareil radio (9), en particulier d'un téléphone mobile, par l'intermédiaire d'une liaison radio, en particulier à un dispositif d'un véhicule automobile ou à un dispositif radio fixe, dans lequel
- l'agencement comprend une surface d'appui (7) pour appliquer l'appareil radio (9),
- l'agencement comprend une antenne (33) pour établir et maintenir le couplage sans fil de l'appareil radio, ou comprend une pluralité d'antennes (102) positionnées les unes à côté des autres, qui sont actionnables sélectivement pour établir et maintenir le couplage sans fil de l'appareil radio (9),
- la surface d'appui (7) comprend un évidement (117) symétrique en rotation autour d'un axe de rotation (18) s'étendant perpendiculairement à la surface d'appui (7), de sorte qu'un appareil radio (111) avec une saillie (204) qui s'engage dans l'évidement (117), peut exploiter une liaison radio avec l'antenne (33) ou avec une antenne (102) de la pluralité d'antennes dans différentes positions de rotation par rapport à l'axe de rotation (18), et de sorte, en variante, qu'un appareil radio (9) qui ne s'engage pas dans l'évidement (117) mais est appliqué contre la surface d'appui (7), peut se trouver dans n'importe quelle orientation et n'importe quelle position à l'intérieur d'un espace délimité par la surface d'appui (7) et l'agencement, et peut exploiter une liaison radio avec l'antenne (33) ou avec une antenne (102) de la pluralité d'antennes, respectivement,
- l'agencement comprend une bobine de charge côté primaire (2) pour générer un champ électromagnétique qui peut être reçu par un dispositif de charge côté secondaire (230) de l'appareil radio (111) et peut être utilisé pour charger un accumulateur d'énergie (114) de l'appareil radio (111),
- la bobine de charge côté primaire (2) est orientée par rapport à l'axe de rotation (18) de telle sorte que la densité de flux magnétique du champ électromagnétique généré par la bobine de charge côté primaire (2) est maximale dans la direction de l'axe de rotation (18), **caractérisé en ce que**
- l'antenne (33) ou les antennes (102) sont formées respectivement par au moins une couche électriquement conductrice portée par un support en matériau électriquement non conducteur, dans lequel la ou les couches s'étendent le long de la surface d'appui, et
- la ou les couches électriquement conductrices d'au moins une partie des antennes sont agencées à une distance de la surface d'appui inférieure ou égale par rapport à la bobine de charge (2).

2. Agencement selon la revendication 1, dans lequel est valable ce qui suit en ce qui concerne l'atténuation de couplage des liaisons radio possibles entre l'antenne radio de l'appareil radio, d'une part, et l'antenne (33) ou une antenne de la pluralité des antennes, d'autre part :
a. la liaison radio entre l'antenne radio et l'antenne ou une autre antenne de la pluralité d'antennes subit sensiblement la même atténuation de couplage dans n'importe quelle position et/ou orientation de l'appareil radio par rapport à l'agencement lorsque l'appareil radio est appliqué contre la surface d'appui, indépendamment du fait que la saillie s'engage ou non dans l'évidement et/ou
b. l'atténuation de couplage de la liaison radio ne dépasse pas une valeur maximale prédéfinie pour toute la plage des positions et orientations possibles de l'appareil radio lorsqu'il est appliqué contre la surface d'appui, indépendamment du fait que la saillie s'engage ou non dans l'évidement.

3. Agencement selon la revendication 1 ou 2, dans lequel l'agencement est conçu pour sélectionner respectivement l'antenne de la pluralité d'antennes par l'intermédiaire de laquelle la liaison radio avec l'antenne radio de l'appareil radio subit l'atténuation de couplage la plus faible.

4. Agencement selon l'une des revendications précédentes, dans lequel la ou les couches électriquement conductrices s'étendent dans une zone spatiale délimitée par deux plans parallèles l'un à l'autre, qui sont parallèles à la surface d'appui.

5. Agencement selon l'une des revendications précédentes, dans lequel la ou les couches électriquement conductrices sont en forme de bande.

6. Agencement selon l'une des revendications précédentes, dans lequel le support (1) est un support en forme de plaque, sur un côté duquel sont agencées la ou les couches électriquement conductrices d'au moins une antenne (3) et sur le côté opposé, plus éloigné de la surface d'appui, duquel est agencée la bobine de charge.

7. Agencement selon l'une des revendications précédentes, dans lequel
- le support (1) comprend une première surface plane et une seconde surface plane située sur le côté opposé du support (1) et s'étendant parallèlement à la première surface,
- sur la première surface est appliquée une première couche électriquement conductrice qui émet des ondes radio à destination de et/ou reçoit des ondes radio en provenance d'une antenne de l'appareil radio pendant l'exploitation de l'agencement comme antenne de couplage, et couple ainsi l'appareil radio,
- la première couche électriquement conductrice comprend une première étendue (13) qui comprend un bord extérieur convexe,
- la première étendue (13) est reliée de manière électriquement conductrice à un premier contact d'une borne pour la connexion de la ligne à haute fréquence par l'intermédiaire d'une ligne de connexion de préférence droite qui est conçue comme une ligne ruban (14) et fait partie de la première couche électriquement conductrice, dans lequel la ligne ruban (14) s'étend du bord extérieur convexe jusqu'à une zone de bordure du support (1),
- une seconde couche électriquement conductrice est appliquée sur la seconde surface,
- la seconde couche électriquement conductrice comprend une seconde étendue (15) qui présente un bord extérieur convexe,
- la région de la seconde couche électriquement conductrice qui comprend la seconde étendue (15) est appliquée sur une région partielle de la seconde surface, dans lequel, vu depuis la région partielle, sur le côté opposé du support (1), la ligne ruban (14) est appliquée sur la première surface, et
- la seconde étendue (15) est reliée de manière électriquement conductrice à un second contact de la borne,
- l'antenne de couplage est l'antenne ou une des antennes selon la revendication 1.

8. Agencement selon l'une des revendications précédentes, dans lequel
- le support (1) comprend au moins une première surface plane,
- sur la première surface est appliquée la couche électriquement conductrice ou l'une des couches électriquement conductrices qui émet des ondes radio à destination de et/ou reçoit des ondes radio en provenance d'une antenne radio (8) de l'appareil radio pendant l'exploitation de l'agencement comme antenne de couplage, et couple ainsi l'appareil radio (9),
- la couche électriquement conductrice comprend sur la première surface une première étendue (23) qui présente un bord extérieur convexe,
- la couche électriquement conductrice comprend sur la première surface une seconde étendue (25) qui présente un bord extérieur convexe,
- les première (23) et seconde (25) étendues sont appliquées sur différentes régions partielles de la première surface, dans lequel les première (23) et seconde (25) étendues sont reliées au niveau de leurs bords convexes à la ligne à haute fréquence par l'intermédiaire d'un Balun (24),
- l'antenne de couplage est une des antennes selon la revendication 1.

9. Procédé de couplage sans fil d'un appareil radio (111), en particulier d'un téléphone mobile, par l'intermédiaire d'une liaison radio, notamment à un dispositif d'un véhicule automobile ou à un dispositif radio fixe, dans lequel
- l'appareil radio (111) est appliqué contre une surface d'appui (7),
- la surface d'appui (7) comprend un évidement (117) symétrique en rotation autour d'un axe de rotation s'étendant perpendiculairement à la surface d'appui (7), dans lequel une saillie (204) de l'appareil radio (111) est insérée dans l'évidement (117) pour appliquer l'appareil radio contre la surface d'appui et une parmi plusieurs positions de rotation différentes possibles par rapport à l'axe de rotation (18) est réglée, ou bien, en variante, l'appareil radio (111) ou un autre appareil radio (9) est appliqué contre la surface d'appui (7) dans n'importe quelle orientation et n'importe quelle position à l'intérieur d'un espace délimité par la surface d'appui (7) et, facultativement, par d'autres parties d'un agencement de couplage,
- entre une antenne radio (8) de l'appareil radio (9 ; 111) appliqué
-- et une antenne (3) agencée sur la surface d'appui (7), une liaison radio est exploitée, dans lequel une liaison radio entre l'antenne radio (8) et l'antenne (3) agencée sur la surface d'appui (7) serait exploitable et est exploitée aussi le cas échéant également dans les autres positions de rotation ou dans d'autres orientations et positions, ou
-- et une antenne sélectionnée, qui est sélectionnée parmi une pluralité d'antennes (102) positionnées les unes à côté des autres le long de la surface d'appui, une liaison radio est exploitée, dans lequel une liaison radio entre l'antenne radio (8) d'une part, et l'antenne (102) sélectionnée ou une autre antenne, qui est sélectionnée parmi la pluralité d'antennes (102) positionnées les unes à côté des autres le long de la surface d'appui, d'autre part, serait exploitable et est exploitée aussi le cas échéant également dans les autres positions de rotation ou dans d'autres orientations et positions,
- pendant qu'une saillie (204) de l'appareil radio (111) est agencée dans l'évidement (117), un dispositif de réception côté secondaire (230) de l'appareil radio (111) est alimenté en énergie de manière inductive par un champ électromagnétique par une bobine de charge côté primaire (2) de l'agencement, pendant l'exploitation de la liaison radio, dans lequel la bobine de charge côté primaire (2) est orientée par rapport à l'axe de rotation (18) de telle sorte que la densité de flux magnétique du champ électromagnétique généré par la bobine de charge côté primaire (2) est maximale dans la direction de l'axe de rotation (18),
**caractérisé en ce que**
- l'antenne (33) ou les antennes (102) sont respectivement formées par au moins une couche électriquement conductrice portée par un support en matériau électriquement non conducteur, dans lequel la ou les couches s'étendent le long de la surface d'appui, et
- la ou les couches électriquement conductrices d'au moins une partie des antennes sont agencées à une distance de la surface d'appui inférieure ou égale par rapport à la bobine de charge (2) .

10. Procédé selon la revendication 9, dans lequel est garanti ce qui suit en ce qui concerne l'atténuation de couplage des liaisons radio possibles entre l'antenne radio de l'appareil radio, d'une part, et l'antenne (33) ou une antenne de la pluralité des antennes, d'autre part :
a. la liaison radio entre l'antenne radio et l'antenne ou une autre antenne de la pluralité d'antennes subit sensiblement la même atténuation de couplage dans n'importe quelle position et/ou orientation de l'appareil radio par rapport à l'agencement lorsque l'appareil radio est appliqué contre la surface d'appui, indépendamment du fait que la saillie s'engage ou non dans l'évidement et/ou
b. l'atténuation de couplage de la liaison radio ne dépasse pas une valeur maximale prédéfinie pour toute la plage des positions et orientations possibles de l'appareil radio lorsqu'il est appliqué contre la surface d'appui, indépendamment du fait que la saillie s'engage ou non dans l'évidement.

11. Procédé de production d'un agencement de couplage sans fil d'un appareil radio (9), en particulier d'un téléphone mobile, par l'intermédiaire d'une liaison radio, en particulier à un dispositif d'un véhicule automobile ou à un dispositif radio fixe, dans lequel
- une surface d'appui (7) pour appliquer l'appareil radio (9) est prévue,
- une antenne (3) est prévue pour établir et maintenir le couplage sans fil de l'appareil radio, ou une pluralité d'antennes (102) positionnées les unes à côté des autres est agencée le long de la surface d'appui, qui sont actionnables sélectivement pour établir et maintenir le couplage sans fil de l'appareil radio (9),
- dans la surface d'appui (7) est prévu un évidement (117) symétrique en rotation autour d'un axe de rotation (18) s'étendant perpendiculairement à la surface d'appui (7), de sorte qu'un appareil radio (111) avec une saillie (204) qui s'engage dans l'évidement, peut exploiter une liaison radio avec l'antenne ou avec une antenne de la pluralité d'antennes dans différentes positions de rotation par rapport à l'axe de rotation, et de sorte, en variante, qu'un appareil radio (9) qui ne s'engage pas dans l'évidement mais est appliqué contre la surface d'appui, peut se trouver dans n'importe quelle orientation et n'importe quelle position à l'intérieur d'un espace délimité par la surface d'appui et par l'agencement et peut exploiter respectivement une liaison radio avec l'antenne (3) ou avec une antenne de la pluralité d'antennes (102),
- une bobine de charge côté primaire (2) est prévue pour générer un champ électromagnétique qui peut être reçu par un dispositif de charge côté secondaire (230) de l'appareil radio (111) et peut être utilisé pour charger un accumulateur d'énergie (114) de l'appareil radio (111),
- la bobine de charge côté primaire (2) est orientée par rapport à l'axe de rotation (18) de sorte que la densité de flux magnétique du champ électromagnétique généré par la bobine de charge côté primaire (2) est maximale dans la direction de l'axe de rotation (18),
**caractérisé en ce que**
- l'antenne (33) ou les antennes (102) sont respectivement formées par des couches électriquement conductrices portées par un support en matériau électriquement non conducteur, et
- les couches électriquement conductrices d'au moins une partie des antennes sont agencées à une distance de la surface d'appui inférieure ou égale par rapport à la bobine de charge (2).

12. Procédé selon la revendication 11, dans lequel est valable ce qui suit en ce qui concerne l'atténuation de couplage des liaisons radio possibles entre l'antenne radio de l'appareil radio, d'une part, et l'antenne (33) ou une antenne de la pluralité des antennes, d'autre part :
a. la liaison radio entre l'antenne radio et l'antenne ou une autre antenne de la pluralité d'antennes subit sensiblement la même atténuation de couplage dans n'importe quelle position et/ou orientation de l'appareil radio par rapport à l'agencement lorsque l'appareil radio est appliqué contre la surface d'appui, indépendamment du fait que la saillie s'engage ou non dans l'évidement et/ou
b. l'atténuation de couplage de la liaison radio ne dépasse pas une valeur maximale prédéfinie pour toute la plage des positions et orientations possibles de l'appareil radio lorsqu'il est appliqué contre la surface d'appui, indépendamment du fait que la saillie s'engage ou non dans l'évidement.
